(19) Europäisches Patentamt
European Patent Office
Office européen des brevets

(11) Veröffentlichungsnummer: **0 013 416**
**B1**

(12) # EUROPÄISCHE PATENTSCHRIFT

(45) Veröffentlichungstag der Patentschrift: **18.09.85**

(21) Anmeldenummer: **79105340.8**

(22) Anmeldetag: **21.12.79**

(51) Int. Cl.4: **C 07 C 102/00,**
C 07 C 103/58, C 07 C 103/64,
C 08 F 20/60, D 21 H 3/38,
C 02 F 1/56

(54) **Verfahren zur Herstellung von alpha-beta-ungesättigten N-substituierten Carbonsäureamiden, neue alpha-beta-ungesättigte N-substituierte Carbonsäureamide und ihre Verwendung zur Herstellung von Ionenaustauschern.**

(30) Priorität: **27.12.78 DE 2856383**
**24.03.79 DE 2911642**

(43) Veröffentlichungstag der Anmeldung:
**23.07.80 Patentblatt 80/15**

(45) Bekanntmachung des Hinweises auf die Patenterteilung:
**18.09.85 Patentblatt 85/38**

(84) Benannte Vertragsstaaten:
**AT BE CH DE FR GB IT LU NL SE**

(56) Entgegenhaltungen:
**DE-A-2 335 330**
**DE-A-2 344 070**
**DE-A-2 557 451**
**DE-A-2 623 838**
**DE-A-2 819 735**
**US-A-3 424 820**
**US-A-3 661 868**
**US-A-3 666 810**
**US-A-3 856 689**

(73) Patentinhaber: **Chemische Fabrik Stockhausen GmbH**
**Bäkerpfad 25**
**D-4150 Krefeld (DE)**

(72) Erfinder: **Goossens, Bernhard, Dipl.-Chem., Dr.**
**Am Buschkothen 53**
**D-5620 Velbert (DE)**
Erfinder: **Küster, Erich, Dipl.-Chem., Dr.**
**Alexanderplatz 15**
**D-4150 Krefeld (DE)**
Erfinder: **Dahmen, Kurt, Dipl.-Chem., Dr.**
**Von Velsen-Strasse 6**
**D-4050 Mönchengladbach 2 (DE)**
Erfinder: **Barthell, Eduard, Dipl.-Chem., Dr.**
**Minkweg 18a**
**D-4150 Krefeld (DE)**

(74) Vertreter: **Klöpsch, Gerald, Dr.-Ing.**
**An Gross St. Martin 6**
**D-5000 Köln 1 (DE)**

(56) Entgegenhaltungen:
**JOURNAL OF AMERICAN CHEMICAL SOCIETY, Band 65, August 1943, Washington, DC, US, A. GALAT et al.: "The interaction of Amides with Amines: A general method of Acylation", Seite 1566-67**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0013416 B1

Courier Press, Leamington Spa, England.

**Beschreibung**

N-substituierte Alkylacrylamide sind schon seit längerem bekannt. Sie können durch Umsetzung von Acrylnitril mit 1-Olefinen (JACS *73*, 1951, 4076), sowie durch Reaktion von primären oder sekundären Aminen mit einer Additionsverbindung von Maleinsäureanhydrid und Triphenylphosphin (JP—PS 6920083) hergestellt werden. Nach GB—PS 746747 lassen sich N-substituierte Acrylamide durch Dehydrohalogenierung von β-Chlorpropionsäureamiden, nach DE—OS 2344070 durch Pyrolyse von β-Methoxipropionsäureamiden gewinnen. Sie können ferner nach dem Verfahren der Schotten-Baumann-Reaktion durch Umsetzung von Acrylchlorid mit entsprechenden Diaminen (US—PS 2951907), durch katalytische Addierung von funktionalisierten Aminen an Acetylen unter Co-Atmosphäre (US—PS 2773063), durch reduktive Aminierung von Diacetonacrylamid (J. Polym. Sci. *10* (1972), 595), sowie durch Pyrolyse von Norbornenderivaten (DE—OS 2354602) hergestellt werden. Schließlich erhält man diese Verbindungen auch nach den Verfahren der DE—OS 2502247, DE—OS 2656682 und US—PS 3878247, indem man an Acryl- bzw. Methacrylsäureester unter gleichzeitiger Aminolyse Amine anlagert, wobei N-substituierte β-Aminopropionsäureamide entstehen, die pyrolytisch zu den entsprechenden α,β-ungesättigten N-substituierten Carbonsäureamiden gespalten werden. In den älteren, nicht vorveröffentlichten DE-Patentanmeldungen P 28 19 735 und P 28 36 520 sind Verfahren zur Herstellung α,β-ungesättigter N-substituierter Säureamide durch Umsetzung von β-Hydroxi- bzw. β-Alkoxisäureamiden mit Aminen unter Eliminierung von Ammoniak und Umwandlung der entstandenen N-substituierten Hydroxi- bzw. Alkoxisäureamide durch Dehydratisierung bzw. Alkoholabspaltung in die entsprechenden α,β-ungesättigten N-substituierten Säureamide durch Erhitzen in flüssiger Phase in Gegenwart von Katalysatoren beschreiben.

Aus der US—A—3,424,820 sind Pfropfcopolymere von Aminen, darunter von N - (2,2 - dimethyl - 3 - dimethylaminopropyl)acrylamid mit Polyamid oder Polyester zur verbesserten Färbbarkeit des Polyamids oder Polyesters bekannt. Bei der Herstellung des Pfropfcopolymeren entsteht offenbar auch Homopolymeres. In der DE—A—23 35 330 ist auch bereits das 2 - Acrylamido - 2 - methylpropyl - dimethylamin sowie dessen Methylchlorid-Derivat genannt. Dieses Amin, das in β-Stellung zur endständigen tertiären Aminogruppe noch Wasserstoff aufweist, wird in polymerisierter Form als Retentions- und Entwässerungshilfsmittel bei der Papierherstellung eingesetzt.

Es wurde nun gefunden, daß man α,β-ungesättigte N-substituierte Säureamide in technisch einfacher Weise und mit hohen Ausbeuten auch dadurch herstellen kann, daß man die durch Umamidierung von β-Hydroxyl- bzw. β-Alkoxicarbonsäureamiden mit Aminen erhaltenen N-substituierten β-Hydroxi- bzw. β-Alkoxicarbonsäureamide in der Gasphase zu den gewünschten N-substituierten α,β-ungesättigten Carbonsäureamiden dehydratisieren bzw. dealkoholisieren kann.

Gegenstand der Erfindung ist daher ein Verfahren zur Herstellung von α,β-ungesättigten N-substituierten Carbonsäureamiden der allgemeinen Formel

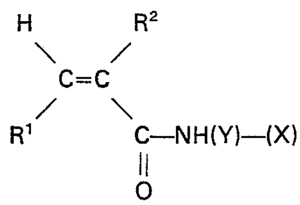

I

in der

$R^1$ und $R^2$ Wasserstoff oder Methyl

Y einen zweiwertigen gerad- oder verzweigtkettigen organischen Rest mit 2 bis 30, vorzugsweise 2 bis 18 Kohlenstoffatomen, vorzugsweise eine Gruppe der Formel $-(Y_1)_m-(Y_2)_n-(Y_3)_t-$, in welcher $Y_1$, $Y_2$ und $Y_3$ jeweils für eine Alkylengruppe oder den Rest eines cyclischen organischen Ringsystems mit 5 oder 6 Kohlenstoffatomen stehen, und die Summe von m, n, und t 2 oder 3 beträgt, und

X Wasserstoff oder den Rest eines Amins der Formel $-N(R^4)(R^5)$, wobei $R^4$ und $R^5$ für Alkylreste mit 1 bis 4 Kohlenstoffatomen stehen oder Cycloalkylreste mit 3 bis 8 C-Atomen darstellen, das dadurch gekennzeichnet ist, daß man β-substituierte Carbonsäureamide der allgemeinen Formel

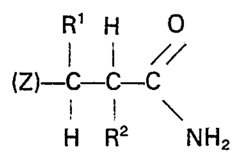

III

in der

$R^1$ und $R^2$ Wasserstoff oder Methyl und

Z eine Hydroxigruppe oder den Rest eines Alkohols der Formel $R^8O-$ bedeuten, worin $R^8$ für einen Alkylrest mit 1 bis 4 Kohlenstoffatomen steht, mit primären Aminen der allgemeinen Formel

$$H_2N—(Y)—(X) \qquad (II)$$

in der Y und X die obige Bedeutung habe, bei Temperaturen von 100 bis 200°C, gegebenenfalls unter Zusatz von katalytischen Säuremengen, unter Ammoniakeliminierung zu N-substituierten β-Hydroxi- bzw. β-Alkoxicarbonsäureamiden umsetzt und diese durch Erhitzen in der Gasphase in Gegenwart von Katalysatoren in die α,β-ungesättigten N-substituierten Carbonsäureamide der Formel I, in denen X Wasserstoff oder der Rest Rest $—N—(R_4)—(R_5)$ ist, überführt und die erhaltenen N-substituierten α,β-ungesättigten Carbonsäureamide ggfs. auf bekannte Weise quaterniert oder in Aminsalz überführt.

Die Umwandlung der N-substituierten β-Hydroxi- bzw. β-Alkoxicarbonsäureamide in die α,β-ungesättigten N-substituierten Carbonsäureamide durch Dehydratisierung bzw. Alkoholabspaltung wird also nicht mehr in flüssiger Phase durchgeführt, sondern die N-substituierten β-Hydroxi- bzw. β-Alkoxicarbonsäureamide werden zwecks Wasser- bzw. Alkoholabspaltung—zweckmäßig auf schonende Weise—verdampft und die Dämpfe über einen festen Katalysator geleitet, der zweckmäßig in einem beheizbaren Reaktionsrohr angeordnet ist. Zur schonenden Verdampfung wird vorteilhaft ein Vakuumverdampfer verwendet. Zur weiteren Schonung wird die Verdampfung gegebenenfalls unter Vakuum vorgenommen. Im Gegensatz zur Pyrolyse in flüssiger Phase, bei der der Sumpf längere Zeit thermisch beansprucht wird, ist die Verweilzeit im heißen Reaktionsrohr bei dieser Verfahrensweise sehr kurz, so daß die Gefahr von Nebenreaktionen wie Polymerisation oder Eigenreaktion des N-substituierten β-Hydroxicarbonsäureamids zum Polyester unter Abspaltung von Amin, die in flüssiger Phase bei hohen Temperaturen nicht ausgeschlossen werden kann, minimiert ist.

Es wurde nun gefunden, daß sich, insbesondere beim Einsatz von β-Alkoxicarbonsäureamiden, Essigsäure in einer Menge von 0,5 bis 1,0 Mol% als Katalysator besonders gut eignet. Säureamid und Amin können ohne Lösungsmittelzusatz durch bloßes Erhitzen zur Reaktion gebracht werden, wobei das Reaktionsgleichgewicht durch Abtreiben des entstehenden Ammoniaks in Richtung auf die gewünschten Produkte (=N-substituiertes β-Hydroxi- bzw. β-Alkoxicarbonsäureamid) verschoben wird.

Die Umamidierung kann auch unter Normaldruck ohne Katalysatorzusatz durchgeführt werden, wobei zur Einhaltung von Reaktionszeiten, die in der Größenordnung um 6 Stunden liegen, Amine mit Siedepunkten oberhalb von 110°C eingesetzt werden.

Bevorzugt werden Amine, die zudem mit der Schmelze des Säureamids eine homogene Phase bilden oder z.T. in der Schmelze des Säureamids löslich sind, bzw. selbst einen Teil des Säureamids lösen.

Geringeres gegenseitiges Lösungsvermögen kann zu einer anfänglichen Reaktionsverzögerung führen; mit fortschreitendem Umsatz steigt jedoch die Reaktionsgeschwindigkeit an, da das gebildete N-substituierte β-Hydroxi- bzw. β-Alkoxicarbonsäureamid als Lösungsvermittler dient und sich eine homogene Phase ausbildet. Vorteilhaft ist ein Zusatz von 5 bis 10% des jeweiligen N-substituierten β-Hydroxi- oder β-Alkoxicarbonsäureamids, um diese anfängliche Induktionsperiode zu überbrücken.

Das jeweilige Amin kann in einem Überschuß—bezogen auf Hydroxi- oder Alkoxicarbonsäureamid—eingesetzt werden.

Die Dehydratisierung bzw. Alkoholabspaltung wird bevorzugt in einem Bereich von 200 bis 400°C durchgeführt; bei Aminogruppen enthaltenden β-Hydroxi- bzw. β-Alkoxicarbonsäureamiden erwiesen sich Temperaturen bis 250°C als ausreichend.

Als Dehydratisierungskatalysatoren eignen sich besondes z.B. Metalloxide, wie Aluminiumoxid. Daneben sind auch Mischungen von Oxiden, wie z.B. Aluminiumoxid/Siliziumoxid oder auch imprägnierte Träger, wie z.B. saures Aluminiumoxid oder mit Phosphorsäure imprägnierter Bims, oder auch Salze, wie Aluminiumphosphat oder Borphosphat geeignet. Als feste Katalysatoren für die Alkoholabspaltung eignen sich besonders anorganische Oxide mit saurem oder basischem Charakter, wie z.B. ebenfalls Aluminiumoxid, sowie Siliziumdioxid oder Bariumoxid, die gegebenenfalls noch mit Säuren, wie z.B. Phosphorsäure, oder Basen, wie z.B. Natriumhydroxid, imprägniert werden können.

Als β-Hydroxicarbonsäureamide werden für die Zwecke der Erfindung bevorzugt β-Hydroxipropionsäureamid oder β-Hydroxibuttersäure eingesetzt.

Beispiele für geeignete Amine der allgemeinen Formel

$$H_2N—(Y)—(X) \qquad II$$

sind 2-Dimethylaminoethylamin, 2-Diethylaminoethylamin, 3-Dimethylaminopropylamin, Benzylamin, Cyclohexylamin, Dodecylamin und Stearylamin.

Als Amine werden bevorzugt solche der allgemeinen Formel

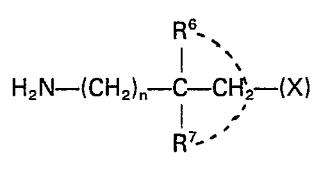

II'

eingesetzt, in der $R^6$ bzw. $R^7$ Alkylgruppen, vorzugsweise niedere Alkylgruppen mit 1 bis 4 C-Atomen, insbesondere Methyl, oder Arylgruppen sein können, oder zusammen mit dem C-Atom, an das sie

gebunden sind, einen aliphatischen Ring, insbesondere den Cyclohexyl- oder den Cyclopentylrest bilden, n eine Zahl von 0 bis 10 ist und X den Rest eines Amins der Formel $—N(R^4)(R^5)$, wobei $R^4$ und $R^5$ für Alkylreste mit 1 bis 4 Kohlenstoffatomen stehen oder Cycloalkylreste mit 3 bis 8 Kohlenstoffatomen darstellen, bedeutet.

Der zweiwertige gerad- oder verzweigtkettige organische Rest Y kann ein Alkylrenrest sein, der gegebenenfalls substituiert ist. Wenn Y für eine Gruppe der Formel $—(Y_1)_m—(Y_2)_n—(Y_3)_t—$ steht, so kann jeder der Reste $Y_1$, $Y_2$ und $Y_3$ eine geradkettige oder verzweigte, gegebenenfalls substituierte Alkylengruppe oder den Rest eines cyclischen organischen Ringsystems mit 5 oder 6 Kohlenstoffatomen bedeuten. Der Cycloalkylrest kann dabei gegebenenfalls ebenfalls, beispielsweise durch Alkyl, subsituiert sein.

Wenn X für den Rest eines Amins der Formel $—N(R^4)(R^5)$ steht, so können diese Reste $R^4$ und $R^5$, die gleich oder verschieden sind, gerad- oder verzweigtkettige Alkylreste mit 1 bis 4 Kohlenstoffatomen, beispielsweise Methyl, Ethyl, Propyl, Isopropyl oder n-Butyl, stehen oder auch Cycloalkylreste mit 3 bis 8 Kohlenstoffatomen wie z.B. Cyclopropyl, Cyclobutyl, Cyclopentyl oder Cyclohexyl, bedeuten.

In gleicher Weise steht Z in Formel (III) für den Rest eines Alkohols der Formel $R^8O—$, wobei $R^8$ ein gerad- oder verzweigtkettiger Alkylrest mit 1 bis 4 Kohlenstoffatomen, beispielsweise Methyl, Ethyl, Propyl, Isopropyl oder n-Butyl, sein kann.

Beispiele für solche bevorzugte Amine sind:

3-Diethylamino-2,2-dimethylpropylamin

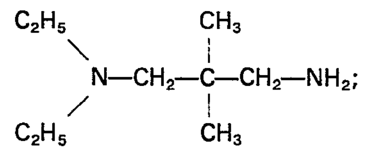

3-Dibutylamino-2,2-dimethylpropylamin

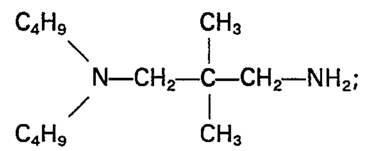

4-Dimethylamino-3,3-dimethylbutylamin-1

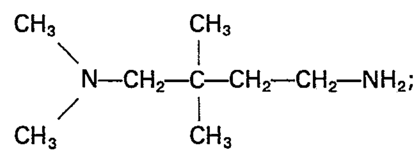

5-Dimethylamino-4,4-dimethylpentylamin-1

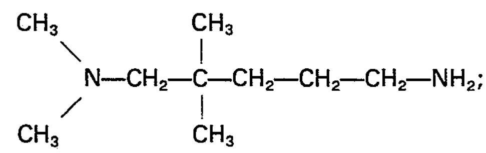

5-Diethylamino-4,4-dimethylpentylamin-1

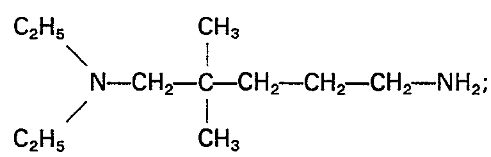

3-Dimethylamino-2-ethyl-2-methylpropylamin

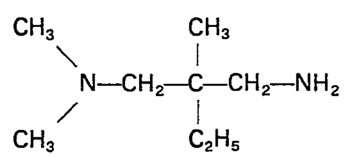

3-Dimethylamino-2-methyl-2-phenylpropylamin

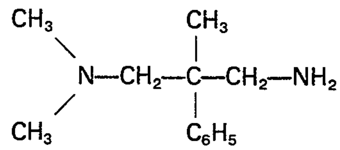

und 3-Dimethylamino-2-ethyl-2-butyl-propylamin

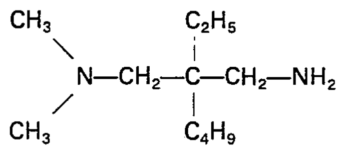

sowie 1-(Aminomethyl)-1-(dimethylaminomethyl)-cyclohexen

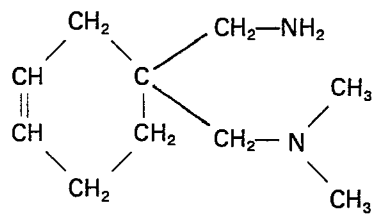

In diesem Aminen trägt das zur tertiären Aminogruppe β-ständige Kohlenstoffatom keinen Wasserstoff mehr, sondern ist statt dessen alkylsubstituiert. Diese Amine der allgemeinen Formel II, die an zum tertiären Stickstoff β-ständigen Kohlenstoff keine Wasserstoffatome mehr tragen, werden erfindungsgemäß bevorzugt, weil bei den unter Verwendung dieser Amine hergestellten Reaktionsprodukten keine temperaturbedingte β-Eliminierung von Amin erfolgen kann. Diese Aminabspaltung, die bei monomeren α,β-ungesättigen, N-substituierten Säureamiden neben der α,β-Doppelbindung zu einer weiteren endständigen Doppelbindung führen würde, ist im Hinblick auf die Verwendung der monomeren Säureamide zur Herstellung von wasserlöslichen Polymerisaten äußerst unerwünscht, da diese Doppelbindung für unerwünschte Vernetzungen zur Verfügung stünde.

Durch geeignete Wahl der β-Substituenten lassen sich überdies die Hydrophilie bzw. Hydrophobie der Monomeren und der aus diesen erzeugten Polymeren je nach Anwendungszweck modifizieren.

Gegenstand der Erfindung sind ferner neue α,β-ungesättigte N-substituierte Carbonsäureamide der allgemeinen Formel

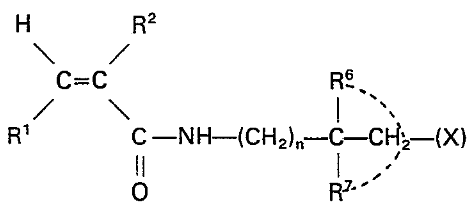

I'

in der

$R^1$ und $R^2$ Wasserstoff oder Methyl,

$R^6$ und $R^7$ Alkylgruppen, vorzugsweise niedere Alkylgruppen mit 1 bis 4 C-Atomen, insbesondere Methyl-, oder Arylgruppen sein können oder zusammen mit dem C-Atom, an das sie gebunden sind, einen aliphatischen Ring, insbesondere den Cyclopentyl- oder Cyclohexylring bilden

n eine Zahl von 1 bis 10 ist und

X den Rest eines Amins der Formel $-N(R^4)(R^5)$, wobei $R^4$ und $R^5$ für Alkylreste mit 1 bis 4 Kohlenstoffatomen stehen oder Cycloalkylreste mit 3 bis 8 Kohlenstoffatomen darstellen, oder eine Ammoniumgruppe der allgemeinen Formel

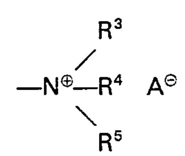

IV

bedeuten, wobei

$R^3$ Wasserstoff oder einen Alkylrest mit 1 bis 4 Kohlenstoffatomen darstellt,

$R^4$ und $R^5$ die oben angegebene Bedeutung haben und

A ein salzbildendes Anion ist,

ausgenommen N - (N',N' - 2,2 - tetramethyl - 3 - aminopropyl)acrylamid.

Gegenstand der Erfindung ist ferner die Verwendung der erfindungsgemäßen α,β-ungesättigten N-substituierten Carbonsäureamide zur Herstellung von Ionenaustauschern.

Die erfindungs gemäßen α,β-ungesattigen N-substituierten Carbon säureamide lassen sich sehr leicht entweder allein oder mit anderen polymerisierbaren Monomeren nach bekannten Verfahren unter Bildung von Homopolymerisaten, Copolymerisaten und anderen Polymerisaten polymerisieren. Diese Polymerisate sind ausgezeichnete Flockungs- und Entwässerungsmittel für die Abwasseraufbereitung und sind ferner zur Verbesserung der Trockenfestigkeit und Naßfestigkeit von Papier sowie als Retentionshilfsmittel geeignet. In diesen Polymerisaten würde die Eliminierung von Amin die spezifische Aktivität herabsetzen und im Grenzfall zur völligen Wirkungslosigkeit führen.

Polymerisate aus den erfindungsgemäßen α,β-ungesättigten N-substituierten Carbonsäureamiden und ihre Verwendung als Sedimentations-, Flockungs-, Entwässerungs- und Retentionshilfsmittel sind Gegenstand der europäischen Teilanmeldung 81 103 346.3.

Die Erfindung wird durch die folgenden Beispiele erläutert:

Beispiel 1:

N-(N',N',2,2-Tetramethyl-3-aminopropyl)acrylamid: (±TEMAPA)

471 g β-Hydroxipropionamid und 722 g N,N,2,2 - Tetramethylpropylendiamin - 1,3 wurden 7 Stunden über ein Temperaturintervall von 140°C bis 160°C bis zum Ende der Ammoniakentwicklung erhitzt. Die anschließende Destillation mittels eines Dünnschichtverdampfers lieferte 1058 g β - Hydroxy - N - (N',N',2',2' - tetramethylaminopropyl)propionsäureamid, Kp 206°C/10 torr.

*NMR:* ($CDCl_3$) δ=0,9(s,6); 2,25(s,2); 2.3(s,6); 2.45(t,2); 3.2(d,2); 3.9(t,2).

917 g des Hydroxyproduktes wurden sukzessiv im Dünnschichtverdampfer verdampft (230°C Verdampfertemperatur, Vakuum 10 mbar) und die Dämpfe durch ein Reaktionsrohr geleitet, das mit 700 g Aluminiumoxid gefüllt und auf 220°C geheizt war. Während des 3,5-stündigen Prozesses wurden 727 N-(N',N',2,2-Tetramethyl-3-aminopropyl)acrylamid gewonne. Kp 137°C/10 mb.

*NMR:* ($CDCl_3$) δ=0,9(s,6); 2.3(m,8); 3,25(d,2); 5.4—6.2(m,3); (siehe Anhang, Fig. 1).

Beispiel 2:

N - (N',N',2,2 - Tetramethyl - 3 - aminopropyl) - 3 - methoxipropionamid

Man erhitzt 412,5 g (4,0 Mol) 3-Methoxipropionamid mit 547 g (4,2 Mol) N,N,2,2 - Tetramethylpropandiamin-1,3 und 4 ml Eisessig 8 Stunden über ein Temperaturintervall von 145 bis 170°C bis zum Ende der Ammoniakentwicklung. Die anschließende Destillation im Hochvakuum liefert 820 g (3,8 Mol=95% d.Th.) farblose Flüssigkeit mit $Kp_{0,2}$=105 bis 108°C.

NMR (in $CCl_4$): δ=0,9(s,6); 2,0 bis 2,5(m,10); 3,05(d,2); 3,3(s,3); 3,55(t,2); 7,40(m,1).

N - (N',N',2,2 - Tetramethyl - 3 - aminopropyl) - acrylamid

Einem auf 170 bis 180°C geheizten Verdampferkolben führt man kontinuierlich insgesamt 820 g (3,8 Mol) N - (N',N',2,2 - Tetramethyl - 3 - aminopropyl) - 3 - methoxipropionamid zu und leitet die Dämpfe unter einem Vakuum von 14 mbar in ein mit Aluminiumoxid in Kugelform, das mit 10% Natriumhydroxid imprägniert ist, gefülltes Reaktionsrohr (100 cm lang, 3 cm Ø), das von außen mit einer Heizbandage auf 300°C geheizt ist. Bei einer Kopftemperatur von 150 bis 220°C werden im Laufe von 2 Stunden etwa 475 g eines gelben Öles aufgefangen, das zur weiteren Reinigung nochmals im Hochvakuum destilliert wird. Man erhält 383 g (2,1 Mol=52% d.Th., bezogen auf 3-Methoxipropionamid) Produkt mit $Kp_{0,2}$=98 bis 102°C.

NMR (in $CCl_4$): δ=0,9(s,6); 2,1(s,2); 2,3(s,6); 3,15(d,2); 5,3 bis 6,5(m,3); 8,0(m,1). (siehe Anhang Fig. 1).

Beispiel 3:

N - (N',N',2,2 - Tetramethyl - 3 - aminopropyl) - 2 - methyl - 3 - methoxipropionamid

Nach der Arbeitsweise von Beispiel 2 erhält man aus 468,6 g (4,0 Mol) 2 - Methyl - 3 - methoxipropionamid 857 g (3,7 Mol=93% d.Th.) farblose Flüssigkeit mit $Kp_{0,2}$=102 bis 106°C.

NMR (in $CCl_4$): δ=0,9(s,6); 1,05(d,3); 2,0 bis 2,7(m,9); 3,05(d,2); 3,2 bis 3,6(m,5); 7,3(m,1).

N - (N',N',2,2 - Tetramethyl - 3 - aminopropyl) - methacrylamid (±TEMAPMA)

Entsprechend Beispiel 2 entstehen aus 857 g (3,7 Mol) Vorprodukt 510 g Produkt. Bei der Destillation im Hochvakuum resultieren 420 g (2,1 Mol=53% d.Th., bezogen auf 2 - Methyl - 3 - methoxipropionamid) mit $Kp_{0,2}$=92 bis 94°C.

NMR (in $CCl_4$): δ=0,9(s,6); 1,9(d,3); 2,2(s,2); 2,3(s,6); 3,1(d,2); 5,1 bis 5,7(m,2); 8,0(m,1). (siehe Anhang Fig. 2).

Beispiel 4:

N - (N',N',2,2 - Tetramethyl - 3 - aminopropyl)crotonsäureamid:

412 g β-Hydroxybuttersäureamid und 546 g N,N,2,2 - Tetramethylpropylendiamin - 1,3 wurden 16 Stunden über ein Temperaturintervall von 148°C bis 160°C erhitzt. 829 g des Reaktionsproduktes wurden sukzessiv mittels eines Dünnschichtverdampfers (250°C/10 mb) als Dampf einem Reaktionsrohr zugeführt, das 700 g Aluminiumoxid enthielt und auf 220°C geheizt war. Während des vierstündigen Prozesses wurden 543 g N - (N',N',2,2 - Tetramethyl - 3 - aminopropyl)crotonsäureamid erhalten. Lip 102°C/0,035 mb.

*NMR:* ($CDCl_3$) δ=0,9(s,6); 1.9(dd,3); 2.15—2.6(m,8); 3.35(m,2); 5.6—7.0(m,2). (siehe Anhang Fig. 3).

Beispiel 5:

N - (N',N',2,2 - Tetramethyl - 3 - aminopropyl) - 3 - methoxibuttersäureamid

Nach der Arbeitsweise von Beispiel 2 erhält man aus 468,6 g (4,0 Mol) 3-Methoxibuttersäureamid 800 g (3,5 Mol=87% d.Th.) hellgelbe Flüssigkeit mit $Kp_{0,2}$=112 bis 114°C.

NMR (in $CDCl_3$): δ=0,9(s,6); 1,15(d,3); 2,0 bis 2,5(m,10); 3,1(d,2); 3,35(s,3); 3,7(q,1); 7,7(m,1).

N - (N',N',2,2 - Tetramethyl - 3 - aminopropyl) - crotonsäureamid

Entsprechend Beispiel 2 entstehen aus 800 g (3,5 Mol) Vorprodukt 587 g Produkt, die nach Destillation im Hochvakuum 516 g (2,6 Mol=65% d.Th.), bezogen auf 3-Methoxibuttersäureamid) hellgelbes, viskoses Öl mit $Kp_{0,2}$=104 bis 108°C ergeben.

NMR (in $CCl_4$): δ=0,9(s,6); 1,8(dd,3); 2,1(s,2); 2,3(s,6); 5,6 bis 7,0(m,2); 7,6(m,1).

In Analogie zu den Beispielen 1—5 werden durch Umsetzung der entsprechenden Amine mit den entsprechenden β-Hydroxy- bzw. β-Methoxycarbonsäureamiden in Moläquivalenten Mengen erhalten:

6): N-(3-Diethylamino-2,2-dimethylpropyl)acrylamid
Kp. 110°C/0.1 mb, NMR s. Anhang (Fig. 4).

7): N-(3-Diethylamino-2,2-dimethylpropyl)methacrylamid
Kp. 117°C/0.1 mb, NMR s. Anhang (Fig. 5).

8): N-(3-Diethylamino-2,2-dimethylpropyl)crotonamid
Kp. 113°C/0.035 mb, NMR s. Anhang (Fig. 6).

9): N-(3-Dibutylamino-2,2-dimethylpropyl)acrylamid
Kp. 155°C/0.09 mb, NMR s. Anhang (Fig. 7).

10): N-(3-Dibutylamino-2,2-dimethylpropyl)methacrylamid
Kp. 125°C/0.032 mb, NMR s. Anhang (Fig. 8).

11): N-(3-Dibutylamino-2,2-dimethylpropyl)crotonamid
Kp. 129°C/0.03 mb, NMR s. Anhang (Fig. 9).

12): N-(4-Dimethylamino-3,3-dimethylbutyl)acrylamid
Kp. 107°C/0.08 mb, NMR s. Anhang (Fig. 10).

13): N-(4-Dimethylamino-3,3-dimethylbutyl)methacrylamid
Kp. 113°C/0.14 mb, NMR s. Anhang (Fig. 11).

14): N-(4-Dimethylamino-3,3-dimethylbutyl)crotonamid
Kp. 120°C/0.03 mb, NMR s. Anhang (Fig. 12).

15): N-(5-Dimethylamino-4,4-dimethylpentyl)acrylamid
Kp. 127°C/0.03 mb, NMR s. Anhang (Fig. 13).

16): N-(5-Dimethylamino-4,4-dimethylpentyl)methacrylamid
Kp. 127°C/0.04 mb, NMR s. Anhang (Fig. 14).

17): N-(5-Dimethylamino-4,4-dimethylpentyl)crotonamid

18): N-(5-Diethylamino-4,4-dimethylpentyl)acrylamid
Kp. 130°C/0.06 mb, NMR s. Anhang (Fig. 16).

19): N-(5-Diethylamino-4,4-dimethylpentyl)methacrylamid
Kp. 132°C/0.035 mb, NMR s. Anhang (Fig. 17).

20): N-(3-Dimethylamino-2-ethyl-2-methylpropyl)acrylamid
Kp. 98°C/0.03 mb, NMR s. Anhang (Fig. 18).

21): N-(3-Dimethylamino-2-ethyl-2-methylpropyl)methacrylamid
Kp. 98°C/0.06 mb, NMR s. Anhang (Fig. 19).

22): N-(3-Dimethylamino-2-methyl-2-phenylpropyl)acrylamid
Kp. 128°C/0.06 mb, NMR s. Anhang (Fig. 20).

23): NMR ($CCl_4$) von 1 - (Acrylamidomethyl) - 1 - dimethylaminomethyl - cyclohexen, Kp. 122°C/0.04 mb (Figur 27).

24): NMR ($CCl_4$) von 1 - (Methacrylamidomethyl) - 1 - dimethylaminomethyl - cyclohexen, Kp. 122°C/0,05 mb, (Fig. 28).

Die auf die vorstehend beschriebene Art hergestellten Aminoverbindungen lassen sich durch Umsetzung mit einer geeigneten Säure (z.B. Schwefelsäure) in die entsprechenden Aminsalze überführen oder können mit einem geeigneten Alkylhalogenid oder Alkylsulfat quarterniert werden. Dies wird in nachfolgenden Beispielen erläutert.

Beispiel 25:
Trimethyl - 3 - (1 - acrylamido - 2,2 - dimethyl - propyl) - ammoniummethosulfat:
Einer Lösung von 289.5 g N - (N',N',2,2 - Tetramethyl - 3 - aminopropyl) - acrylamid in 317 g Wasser werden unter Rühren und Eiskühlung 185.4 g Dimethylsulfat innerhalb von 2,5 Stunden zugetropft. Nach 3-stündiger Nachreaktion wird eine 60% Lösung des quartären Produktes erhalten.

Beispiel 26:
(3 - Acrylamido - 2,2 - dimethylpropyl) - trimethylammoniumchlorid:
Einer Lösung von 376 g N - (3 - Dimethylamino - 2,2 - dimethylpropyl)acrylamid=TEMAPA von Beispiel 1 in 320 g Wasser werden unter starkem Rühren bei 80°C 103 g Methylchlorid innerhalb von 3,5 Stunden bei einem Arbeitsdruck von 0.4 bar aufgedrückt. Es wird eine wässrige Lösung des quartären Produktes erhalten.
Die Acrylamidoverbindungen der Erfindung lassen sich entweder allein oder mit anderen polymerisierbaren Monomeren unter Bildung von Copolymeren oder anderen Polymerisaten polymerisieren.

Beispiel 27:
Homopolymerisat aus Propylen - bis[(3 - Acrylamido - 2,2 - dimethyl)propyl - dimethyl - ammonium]dibromid:
73,7 g TEMAPA und 40,4 g 1,3-Dibrompropan wurden in 50 g Wasser 6 Stunden bei 90°C gerührt, anschliessend wurde auf 40°C abgekühlt und durch Zugabe von 0,5 g Kaliumperoxodisulfat die Polymerisation ausgelöst. Das erhaltene vernetzte Polymerisat wurde bis auf einen Restwassergehalt von 10% getrocknet, zerkleinert und auf ionenaustauschende Eigenschaften getestet. Ionenaustauscherkapazität: 3,1 mval/g ($Br^-$-Form).

**Patentansprüche für die Vertragsstaaten BE, CH, DE, FR, GB, IT, LU, NL, SE**

1. Verfahren zur Herstellung von α,β-ungesättigten N-substituierten Carbonsäureamiden der allgemeinen Formel

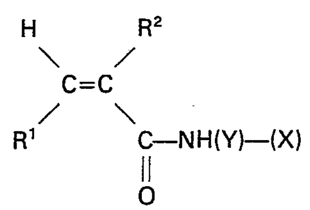
I

in der
$R^1$ und $R^2$ Wasserstoff oder Methyl
Y einen zweiwertigen gerad- oder verzweigtkettigen organischen Rest mit 2 bis 30, vorzugsweise 2 bis 18 Kohlenstoffatomen, vorzugsweise eine Gruppe der Formel $-(Y_1)_m-(Y_2)_n-(Y_3)_t-$, in welcher $Y_1$, $Y_2$ und $Y_3$ jeweils für eine Alkylengruppe oder den Rest eines cyclischen organischen Ringsystems mit 5 oder 6 Kohlenstoffatomen stehen, und die Summe von m, n, und t 2 oder 3 beträgt, und
X Wasserstoff oder den Rest eines Amins der Formel $-N(R^4)(R^5)$, wobei $R^4$ und $R^5$ für Alkylreste mit 1

bis 4 Kohlenstoffatomen stehen oder Cycloalkylreste mit 3 bis 8 C-Atomen darstellen, dadurch gekennzeichnet, daß man β-substituierte Carbonsäureamide der allgemeinen Formel

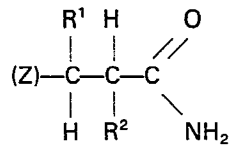

III

in der

$R^1$ und $R^2$ Wasserstoff oder Methyl und

Z eine Hydroxigruppe oder den Rest eines Alkohols der Formel $R^8O$— bedeuten, worin $R^8$ für einen Alkylrest mit 1 bis 4 Kohlenstoffatomen steht, mit primären Aminen der allgemeinen Formel

$$H_2N—(Y)—(X) \qquad II$$

in der Y und X die obige Bedeutung haben, bei Temperaturen von 100 bis 200°C, gegebenenfalls unter Zusatz von katalytischen Säuremengen, unter Ammoniakeliminierung zu N-substituierten β-Hydroxi- bzw. β-Alkoxicarbonsäureamiden umsetzt und diese durch Erhitzen in der Gasphase in Gegenwart von Katalysatoren in die α,β-ungesättigten N-substituierten Carbonsäureamide der Formel I, in denen X Wasserstoff oder der Rest Rest —N—$(R_4)$—$(R_5)$ ist, überführt und die erhaltenen N-substituierten α,β-ungesättigten Carbonsäureamide ggfs. auf bekannte Weise quaterniert oder in Aminsalz überführt.

2. Verfahren nach Anspruch 1, dadurch gekennzeichnet, daß man zur Umsetzung Amine der allgemeinen Formel

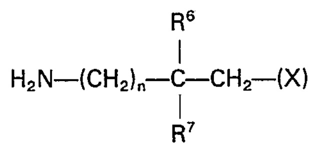

II'

verwendet, in der

$R^6$ und $R^7$ Alkylgruppen, vorzugsweise niedere Alkylgruppen mit 1 bis 4 C-Atomen, insbesondere Methyl-, oder Arylgruppen sind oder zusammen mit dem C-Atom, an das sie gebunden sind, einen aliphatischen Ring, insbesondere den Cyclohexyl- oder Cyclopentylrest bilden,

n eine Zahl von 0 bis 10 ist und

X den Rest eines Amins der Formel —N$(R^4)(R^5)$ bedeutet, wobei $R^4$ und $R^5$ für Alkylreste mit 1 bis 4 Kohlenstoffatomen stehen oder Cycloalkylreste mit 3 bis 8 Kohlenstoffatomen darstellen.

3. Verfahren nach Ansprüchen 1 bis 2, dadurch gekennzeichnet, daß man die entstandenen N-substituierten β-Hydroxy- bzw. β-Alkoxycarbonsäureamide schonend verdampft.

4. Verfahren nach Ansprüchen 1 bis 3, dadurch gekennzeichnet, daß man die N-substituierten β-Hydroxy- bzw. β-Alkoxycarbonsäureamide durch Überleiten ihrer Dämpfe über feste Katalysatoren in die gewünschte α,β-ungesättigten N-substituierten Carbonsäureamide überführt.

5. Verfahren nach Ansprüchen 1 bis 4, dadurch gekennzeichnet, daß man für die Umamidierung Essigsäure als Katalysator in einer Menge von 0,5 bis 1 Mol % verwendet.

6. Verfahren nach Ansprüchen 1 bis 5, dadurch gekennzeichnet, daß man als feste Katalysatoren für die Dehydratisierung der β-Hydroxycarbonsäureamide Metalloxide, vorzugsweise Aluminiumoxid/Siliziumdioxid, oder imprägnierte Trägerkatalysatoren, vorzugsweise saures Aluminiumoxid oder mit Phosphorsäure imprägnierten Bims, oder Salze, vorzugsweise Aluminiumphosphat oder Borphosphat und zur Alkoholabspaltung aus den β-Alkoxycarbonsäureamiden anorganische Oxide mit saurem oder basischem Charakter, vorzugsweise Aluminiumoxid, Siliziumdioxid oder Bariumoxid, gegebenenfalls mit Säuren oder Basen imprägniert, verwendet.

7. Verfahren nach Ansprüchen 1 bis 6, dadurch gekennzeichnet, daß die Dehydratisierung der β-Hydroxicarbonsäureamide bzw. die Alkoholabspaltung aus den β-Alkoxycarbonsäureamiden in einem Temperaturbereich von 200 bis 400°C durchgeführt wird.

8. Neue α,β-ungesättigte N-substituierte Carbonsäureamide der allgemeinen Formel

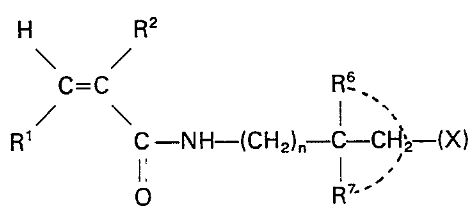

I'

in der

$R^1$ und $R^2$ Wasserstoff oder Methyl,

$R^6$ und $R^7$ Alkylgruppen, vorzugsweise niedere Alkylgruppen mit 1 bis 4 C-Atomen, insbesondere Methyl-, oder Arylgruppen sein können oder zusammen mit dem C-Atom, an das sie gebunden sind, einen aliphatischen Ring, insbesondere den Cyclopentyl- oder Cyclohexylring bilden

n eine Zahl von 1 bis 10 ist und

X den Rest eines Amins der Formel $—N(R^4)(R^5)$, wobei $R^4$ und $R^5$ für Alkylreste für 1 bis 4 Kohlenstoffatomen stehen oder Cycloalkylreste mit 3 bis 8 Kohlenstoffatomen darstellen, oder eine Ammoniumgruppe der allgemeinen Formel

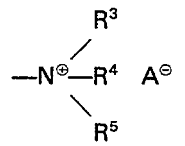

IV

bedeuten, wobei

$R^3$ Wasserstoff oder einen Alkylrest mit 1 bis 4 Kohlenstoffatomen darstellt,

$R^4$ und $R^5$ die im Anspruch 1 angegebene Bedeutung haben und

A ein salzbildendes Anion ist,

ausgenommen N - (N',N' - 2,2 - tetramethyl - 3 - aminopropyl)acrylamid.

9. Verwendung der Produkte nach Anspruch 8 zur Herstellung von Ionenaustauschern.

**Patentansprüche für den Vertragsstaat AT**

1. Verfahren zur Herstellung von α,β-ungesättigten N-substituierten Carbonsäureamiden der allgemeinen Formel

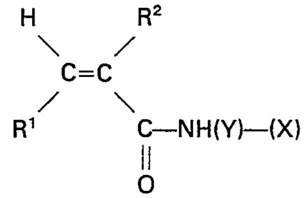

I

in der

$R^1$ und $R^2$ Wasserstoff oder Methyl

Y einen zweiwertigen gerad- oder verzweigtkettigen organischen Rest mit 2 bis 30, vorzugsweise 2 bis 18 Kohlenstoffatomen, vorzugsweise eine Gruppe der Formel $—(Y_1)_m—(Y_2)_n—(Y_3)_t—$, in welcher $Y_1$, $Y_2$ und $Y_3$ jeweils für eine Alkylengruppe oder den Rest eines cyclischen organischen Ringsystems mit 5 oder 6 Kohlenstoffatomen stehen, und die Summe von m, n, und t 2 oder 3 beträgt, und

X Wasserstoff oder den Rest eines Amins der Formel $—N(R^4)(R^5)$, wobei $R^4$ und $R^5$ für Alkylreste mit 1 bis 4 Kohlenstoffatomen stehen oder Cycloalkylreste mit 3 bis 8 C-Atomen darstellen,

dadurch gekennzeichnet, daß man β-substituierte Carbonsäureamide der allgemeinen Formel

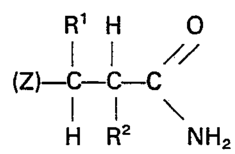

III

in der

$R^1$ und $R^2$ Wasserstoff oder Methyl und

Z eine Hydroxigruppe oder den Rest eines Alkohols der Formel $R^8O—$ bedeuten, worin $R^8$ für einen Alkylrest mit 1 bis 4 Kohlenstoffatomen steht, mit primären Aminen der allgemeinen Formel

$$H_2N—(Y)—(X) \qquad II$$

in der Y und X die obige Bedeutung habe, bei Temperaturen von 100 bis 200°C, gegebenenfalls unter Zusatz von katalytischen Säuremengen, unter Ammoniakeliminierung zu N-substituierten β-Hydroxi- bzw. β-Alkoxicarbonsäureamiden umsetzt und diese durch Erhitzen in der Gasphase in Gegenwart von Katalysatoren in die α,β-ungesättigten N-substituierten Carbonsäureamide der Formel I, in denen X Wasserstoff oder der Rest Rest $—N—(R_4)—(R_5)$ ist, überführt und die erhaltenen N-substituierten α,β-ungesättigten Carbonsäureamide ggfs. auf bekannte Weise quaterniert oder in Aminsalz überführt.

2. Verfahren nach Anspruch 1, dadurch gekennzeichnet, daß man zur Umsetzung Amine der allgemeinen Formel

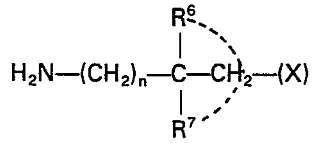

II′

verwendet, in der

$R^6$ und $R^7$ Alkylgruppen, vorzugsweise niedere Alkylgruppen mit 1 bis 4 C-Atomen, insbesondere Methyl-, oder Arylgruppen sind oder zusammen mit dem C-Atom, an das sie gebunden sind, einen aliphatischen Ring, insbesondere den Cyclohexyl- oder Cyclopentylrest bilden,

n eine Zahl von 0 bis 10 ist und

X den Rest eines Amins der Formel $—N(R^4)(R^5)$ bedeutet, wobei $R^4$ und $R^5$ für Alkylreste mit 1 bis 4 Kohlenstoffatomen stehen oder Cycloalkylreste mit 3 bis 8 Kohlenstoffatomen darstellen.

3. Verfahren nach Ansprüchen 1 bis 2, dadurch gekennzeichnet, daß man die entstandenen N-substituierten β-Hydroxy- bzw. β-Alkoxycarbonsäureamide schonend verdampft.

4. Verfahren nach Ansprüchen 1 bis 3, dadurch gekennzeichnet, daß man die N-substituierten β-Hydroxy- bzw. β-Alkoxycarbonsäureamide durch Überleiten ihrer Dämpfe über feste Katalysatoren in die gewünschte α,β-ungesättigten N-substituierten Carbonsäureamide überführt.

5. Verfahren nach Ansprüchen 1 bis 4, dadurch gekennzeichnet, daß man für die Umamidierung Essigsäure als Katalysator in einer Menge von 0,5 bis 1 Mol % verwendet.

6. Verfahren nach Ansprüchen 1 bis 5, dadurch gekennzeichnet, daß man als feste Katalysatoren für die Dehydratisierung der β-Hydroxycarbonsäureamide Metalloxide, vorzugsweise Aluminiumoxid/Siliziumdioxid, oder imprägnierte Trägerkatalysatoren, vorzugsweise saures Aluminiumoxid oder mit Phosphorsäure imprägnierten Bims, oder Salze, vorzugsweise Aluminiumphosphat oder Borphosphat und zur Alkoholabspaltung aus den β-Alkoxycarbonsäureamiden anorganische Oxide mit saurem oder basischem Charakter, vorzugsweise Aluminiumoxid, Siliziumdioxid oder Bariumoxid, gegebenenfalls mit Säuren oder Basen imprägniert, verwendet.

7. Verfahren nach Ansprüchen 1 bis 6, dadurch gekennzeichnet, daß die Dehydratisierung der β-Hydroxicarbonsäureamide bzw. die Alkoholabspaltung aus den β-Alkoxycarbonsäureamiden in einem Temperaturbereich von 200 bis 400°C durchgeführt wird.

8. Verwendung von Produkten nach Anspruch 2, in denen n eine Zahl von 1 bis 10 ist, X im Falle des quaternierten Derivats oder des Aminsalzes des Rests $—N(R_4)(R_5)$ eine Ammoniumgruppe der allgemeinen Formel

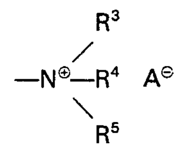

IV

bedeutet, wobei

$R^3$ Wasserstoff oder einen Alkylrest mit 1 bis 4 Kohlenstoffatomen darstellt,

$R^4$ und $R^5$ die im Anspruch 2 angegebene Bedeutung haben und

A ein salzbildendes Anion ist, und N - (N′,N′ - 2,2 - tetramethyl - 3 - aminopropyl)acrylamid, ausgenommen ist, zur Herstellung von Ionenaustauschern.

**Revendications pour les Etats contractants: BE, CH, DE, FR, GB, IT, LU, NL, SE**

1. Procédé de préparation d'amides d'acides carboxyliques à insaturation α,β N-substitués de la formule générale

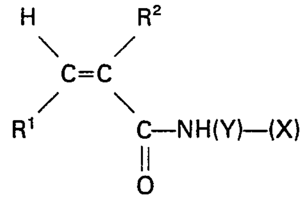

(I),

dans laquelle

$R^1$ et $R^2$ désignent chacun un atome d'hydrogène ou un radical méthyle;

Y représente un groupe organique à chaîne droite ou ramifiée bivalent en $C_2$ à $C_{30}$, en particulier en $C_2$ à

$C_{18}$, et de préférence un groupe de la formule $—(Y_1)_m—(Y_2)_n—(Y_3)_t—$, dans laquelle $Y_1$, $Y_2$ et $Y_3$ représentent chacun un radical alcoylène ou le reste d'un composé organique cyclique avec 5 ou 6 atomes de carbone, la somme m+n+t étant égale à 2 ou 3, et

X un atome d'hydrogène ou un groupe amine de la formule $—N(R^4)(R^5)$, dans laquelle $R^4$ et $R^5$ désignent chacun un radical alcoyle en $C_1$ à $C_4$ ou cycloalcoyle en $C_3$ à $C_8$, caractérisé en ce que l'on transforme des amides d'acides carboxyliques β-substitués de la formule générale

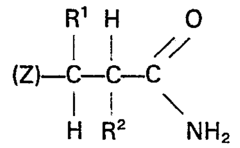

(III),

dans laquelle

$R^1$ et $R^2$ désignent chacun un atome d'hydrogène ou un radical méthyle et

Z représente un radical oxhydryle ou le reste d'un alcool de la formule $R^8O—$, dans laquelle $R^8$ est un radical alcoyle en $C_1$ à $C_4$, par réaction avec des amines primaires de la formule générale

$$H_2N—(Y)—(X) \qquad (II),$$

dans laquelle Y et X possèdent les significations définies, à des températures de 100 à 200°C, éventuellement en présence d'une proportion catalytique d'un acide et avec élimination concomitante de l'ammoniac, les amides d'acides β-hydroxy- ou β-alcoxy-carboxyliques formés étant transformés par chauffage en phase gazeuse en présence d'un catalyseur en amides d'acides carboxyliques à insaturation α,β N-substitués de la formule I avec X=—H ou $—(N)—(R_4)—(R_5)$, qui peuvent le cas échéant être quaternisés ou transformés en un sel d'amine.

2. Procédé suivant la revendication 1, caractérisé en ce que l'on emploie pour la réaction des amines de la formule générale

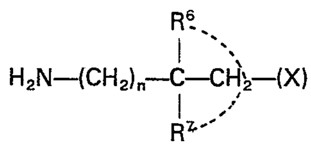

(II'),

dans laquelle

$R^6$ et $R^7$ représentent chacun un radical alcoyle, de préférence un radical alcoyle inférieur en $C_1$ à $C_4$ et surtout un radical méthyle, ou un groupe aryle, ou forment avec l'atome de carbone adjacent un noyau cyclique aliphatique, en particulier un reste cyclohexyle ou cyclopentyle;

n vaut 0 à 10 et

X désigne un groupe amine de la formule $—N(R^4)(R^5)$, dans laquelle $R^4$ et $R^5$ représentent chacun un radical alcoyle en $C_1$ à $C_4$ ou un groupe cyclo-alcoyle en $C_3$ à $C_8$.

3. Procédé suivant l'une des revendications 1 et 2, caractérisé en ce que les amides d'acides β-hydroxy- ou β-alcoxy-carboxyliques N-substitués formés sont soumis à une vaporisation ménagée.

4. Procédé suivant l'une des revendications 1 à 3, caractérisé en ce que les amides d'acides β-hydroxy- ou β-alcoxy-carboxyliques N-substitués sont transformés en amides d'acides carboxyliques à insaturation α,β N-substitués recherchés par passage à l'état de vapeur sur un catalyseur solide.

5. Procédé suivant l'une des revendications 1 à 4, caractérisé en ce que la transamidation est effectuée en présence d'acide acétique comme catalyseur en une proportion de 0,5 à 1% molaire.

6. Procédé suivant l'une des revendications 1 à 5, caractérisé en ce que les catalyseurs solides pour la déshydratation des amides d'acides β-hydroxy-carboxyliques sont choisis parmi les oxydes de métaux, en particulier un mélange d'oxyde d'aluminium et de bioxyde de silicium, les catalyseurs sur supports imprégnés, en particulier l'oxyde d'aluminium acide ou de la pierre ponce imprégnée d'acide phosphorique, et les sels, en particulier le phosphate d'aluminium ou le phosphate de bore, et pour le clivage de l'alcool des amides d'acides β-alcoxy-carboxyliques parmi les oxydes minéraux à caractère acide ou basique, de préférence l'oxyde d'aluminium, le bioxyde de silicium et l'oxyde de baryum, éventuellement imprégnés d'acide ou de base.

7. Procédé suivant l'une des revendications 1 à 6, caractérisé en ce que la déshydratation des amides d'acides β-hydroxy-carboxyliques ou le clivage de l'alcool des amides d'acides β-alcoxy-carboxyliques est réalisé dans la gamme de températures de 200 à 400°C.

8. Nouveaux amides d'acides carboxyliques à insaturation α,β N-substitués de la formule générale

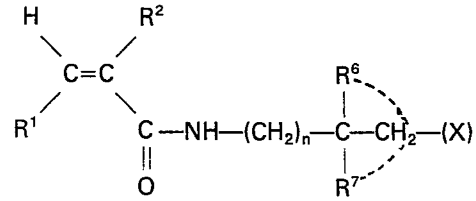

(I'),

dans laquelle

$R^1$ et $R^2$ désignent chacun un atome d'hydrogène ou un radical méthyle;

$R^6$ et $R^7$ représentent chacun un radical alcoyle, de préférence un radical alcoyle inférieur en $C_1$ à $C_4$ et surtout un radical méthyle, ou un groupe aryle, ou forment avec l'atome de carbone adjacent un noyau cyclique aliphatique, en particulier un reste cyclopentyle ou cyclohexyle;

n vaut 0 à 10 et

X désigne un groupe amine de la formule $—N(R^4)(R^5)$, dans laquelle $R^4$ et $R^5$ représentent chacun un radical alcoyle en $C_1$ à $C_4$ ou un groupe cyclo-alcoyle en $C_3$ à $C_8$, ou un groupe ammonium de la formule générale

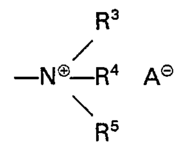

(IV),

dans laquelle $R^3$ représente un atome d'hydrogène ou un radical alcoyle en $C_1$ à $C_4$, $R^4$ et $R^5$ possèdent les significations définies dans la revendication 1 et A désigne un anion salifiant, à l'exception de l'amide N - (N',N' - 2,2 - tétraméthyl - 3 - amino-propyl) - acrylique.

9. Utilisation des produits suivant la revendication 8 pour la préparation de résines échangeuses d'ions.

**Revendications pour l'Etat Contractant: AT**

1. Procédé de préparation d'amides d'acides carboxyliques à insaturation α,β N-substitués de la formule générale

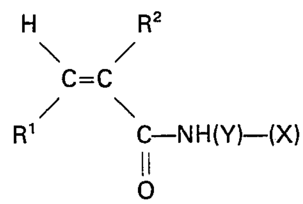

(I),

dans laquelle

$R^1$ et $R^2$ désignent chacun un atome d'hydrogène ou un radical méthyle;

Y représente un groupe organique à chaîne droite ou ramifiée bivalent en $C_2$ à $C_{30}$, en particulier en $C_2$ à $C_{18}$, et de préférence un groupe de la formule $—(Y_1)_m—(Y_2)_n—(Y_3)_t—$, dans laquelle $Y_1$, $Y_2$ et $Y_3$ représentent chacun un radical alcoylène ou le reste d'un composé organique cyclique avec 5 ou 6 atomes de carbone, la somme m+n+t étant égale à 2 ou 3, et X un atome d'hydrogène ou un groupe amine de la formule $—N(R^4)(R^5)$, dans laquelle $R^4$ et $R^5$ désignent chacun un radical alcoyle en $C_1$ à $C_4$ ou cycloalcoyle en $C_3$ à $C_8$, caractérisé en ce que l'on transforme des amides d'acides carboxyliques β-substitués de la formule générale

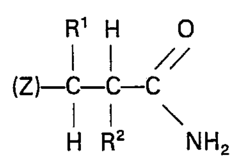

(III),

dans laquelle

$R^1$ et $R^2$ désignent chacun un atome d'hydrogène ou un radical méthyle et

Z représente un radical oxhydryle ou le reste d'un alcool de la formule $R^8O—$, dans laquelle $R^8$ est un radical alcoyle en $C_1$ à $C_4$, par réaction avec des amines primaires de la formule générale

$$H_2N—(Y)—(X) \quad (II),$$

dans laquelle Y et X possèdent les significations définies, à des températures de 100 à 200°C, éventuellement en présence d'une proportion catalytique d'un acide et avec élimination concomitante de l'ammoniac, les amides d'acides β-hydroxy- ou β-alcoxy-carboxyliques formés étant transformés par chauffage en phase gazeuse en présence d'un catalyseur en amides d'acides carboxyliques à insaturation α,β N-substitués de la formule I avec X=—H ou —(N)—($R_4$)—($R_5$), qui peuvent le cas échéant être quaternisés ou transformés en un sel d'amine.

2. Procédé suivant la revendication 1, caractérisé en ce que l'on emploie pour la réaction des amines de la formule générale

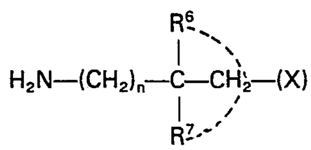

(II')

dans laquelle

$R^6$ et $R^7$ représentent chacun un radical alcoyle, de préférence un radical alcoyle inférieur en $C_1$ à $C_4$ et surtout un radical méthyle, ou un groupe aryle, ou forment avec l'atome de carbone adjacent un noyau cyclique aliphatique, en particulier un reste cyclohexyle ou cyclopentyle;

n vaut 0 à 10 et

X désigne un groupe amine de la formule —N($R^4$)($R^5$), dans laquelle $R^4$ et $R^5$ représentent chacun un radical alcoyle en $C_1$ à $C_4$ ou un groupe cyclo-alcoyle en $C_3$ à $C_8$.

3. Procédé suivant l'une des revendications 1 et 2, caractérisé en ce que les amides d'acides β-hydroxy- ou β-alcoxy-carboxyliques N-substitués formés sont soumis à une vaporisation ménagée.

4. Procédé suivant l'une des revendications 1 à 3, caractérisé en ce que les amides d'acides β-hydroxy- ou β-alcoxy-carboxyliques N-substitués sont transformés en amides d'acides carboxyliques à insaturation α,β N-substitués recherchés par passage à l'état de vapeur sur un catalyseur solide.

5. Procédé suivant l'une des revendications 1 à 4, caractérisé en ce que la transamidation est effectuée en présence d'acide acétique comme catalyseur en une proportion de 0,5 à 1% molaire.

6. Procédé suivant l'une des revendications 1 à 5, caractérisé en ce que les catalyseurs solides pour la déshydratation des amides d'acides β-hydroxy-carboxyliques sont choisis parmi les oxydes de métaux, en particulier un mélange d'oxyde d'aluminium et de bioxyde de silicium, les catalyseurs sur supports imprégnés, en particulier l'oxyde d'aluminium acide ou de la pierre ponce imprégnée d'acide phosphorique, et les sels, en particulier le phosphate d'aluminium ou le phosphate de bore, et pour le clivage de l'alcool des amides d'acides β-alcoxy-carboxyliques parmi les oxydes minéraux à caractère acide ou basique, de préférence l'oxyde d'aluminium, le bioxyde de silicium et l'oxyde de baryum, éventuellement imprégnés d'acide ou de base.

7. Procédé suivant l'une des revendications 1 à 6, caractérisé en ce que la déshydratation des amides d'acides β-hydroxy-carboxyliques ou le clivage de l'alcool des amides d'acides β-alcoxy-carboxyliques est réalisé dans la gamme de température de 200 à 400°C.

8. Utilisation de produits suivant la revendication 2, pour lesquels

n est un nombre valant 1 à 10,

X, dans le cas d'un dérivé quaternisé ou d'un sel d'amine d'un groupe —N($R_4$)($R_5$), est un groupe ammonium de la formule générale

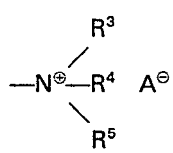

(IV),

dans laquelle

$R^3$ désigne un atome d'hydrogène ou un radical alcoyle en $C_1$ à $C_4$,

$R^4$ et $R^5$ possèdent la signification définie dans la revendication 2 et

A est un anion salifiant, à l'exception de l'amide N - (N',N' - 2,2 - tétraméthyl - 3 - amino - propyl) - acrylique, pour la préparation de résines échangeuses d'ions.

**Claims for Contracting States: BE, CH, DE, FR, GB, IT, LU, NL, SE**

1. Process for the manufacture of α,β-unsaturated N-substituted carboxylic acid amides of the general formula

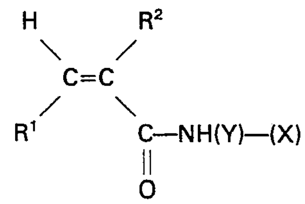

I

in which

$R^1$ and $R^2$ represent hydrogen or methyl,

Y represents a divalent straight-chain or branched organic radical having from 2 to 30, preferably from 2 to 18, carbon atoms, preferably a group of the formula $-(Y_1)_m-(Y_2)_n-(Y_3)_t-$ in which $Y_1$, $Y_2$ and $Y_3$ each represents an alkylene group or the radical of a cyclic organic ring system having 5 or 6 carbon atoms, and the sum of *m*, *n* and *t* is 2 or 3, and

X represents hydrogen or the radical of an amine of the formula $-N(R^4)(R^5)$ in which $R^4$ and $R^5$ represent alkyl radicals having from 1 to 4 carbon atoms or cycloalkyl radicals having from 3 to 8 carbon atoms, characterised in that β-substituted carboxylic acid amides of the general formula

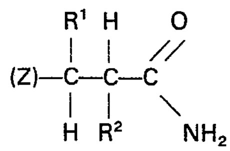

III

in which

$R^1$ and $R^2$ represent hydrogen or methyl, and

Z represents a hydroxy group or the radical of an alcohol of the formula $R^8O-$ in which $R^8$ represents an alkyl radical having from 1 to 4 carbon atoms, are reacted with primary amines of the general formula

$$H_2N-(Y)-(X) \qquad \text{II}$$

in which Y and X have the meanings given above, at temperatures of from 100° to 200°C, optionally with the addition of catalytic amounts of acid, with ammonia being eliminated, to form N-substituted β-hydroxy- or β-alkoxy-carboxylic acid amides, and these are converted by heating in the gaseous phase in the presence of catalysts into the α,β-unsaturated N-substituted carboxylic acid amides of the formula I in which X represents hydrogen or the radical $-N-(R_4)-(R_5)$, and the resulting N-substituted α,β-unsaturated carboxylic acid amides are optionally quaternised or converted into an amine salt in known manner.

2. Process according to claim 1, characterised in that for the reaction there are used amines of the general formula

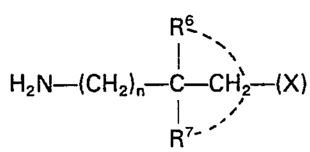

II′

in which

$R^6$ and $R^7$ represent alkyl groups, preferably lower alkyl groups having from 1 to 4 carbon atoms, especially methyl groups, or aryl groups, or together with the carbon atom to which they are bonded form an aliphatic ring, especially the cyclohexyl or cyclopentyl radical,

*n* represents a number from 0 to 10, and

X represents the radical of an amine of the formula $-N(R^4)(R^5)$ in which $R^4$ and $R^5$ represent alkyl radicals having from 1 to 4 carbon atoms or cycloalkyl radicals having from 3 to 8 carbon atoms.

3. Process according to claims 1 and 2, characterised in that the resulting N-substituted β-hydroxy- or β-alkoxy-carboxylic acid amides are vapourised under mild conditions.

4. Process according to claims 1 to 3, characterised in that the N-substituted β-hydroxy- or β-alkoxy-carboxylic acid amides are converted by passing their vapours over solid catalysts into the desired α,β-unsaturated N-substituted carboxylic acid amides.

5. Process according to claims 1 to 4, characterised in that for the transamidation acetic acid is used as catalyst in an amount of from 0.5 to 1 mol %.

6. Process according to claims 1 to 5, characterised in that as solid catalysts for the dehydration of the β-hydroxycarboxylic acid amides there are used metal oxides, preferably aluminium oxide/silicon dioxide, or impregnated carrier catalysts, preferably acidic aluminium oxide, or pumice impregnated with phosphoric acid, or salts, preferably aluminium phosphate or boron phosphate, and for the removal of alcohol from the β-alkoxycarboxylic acid amides there are used inorganic oxides having an acidic or basic

character, preferably aluminium oxide, silicon dioxide or barium oxide, optionally impregnated with acids or bases.

7. Process according to claims 1 to 6, characterised in that the dehydration of the β-hydroxycarboxylic acid amides or the removal of alcohol from the β-alkoxycarboxylic acid amides is carried out in a temperature range of from 200° to 400°C.

8. Novel α,β-unsaturated N-substituted carboxylic acid amides of the general formula

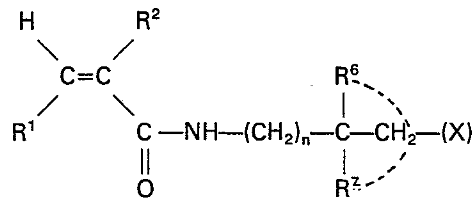

I'

in which

$R^1$ and $R^2$ represent hydrogen or methyl,

$R^6$ and $R^7$ can be alkyl groups, preferably lower alkyl groups having from 1 to 4 carbon atoms, especially methyl groups, or aryl groups, or together with the carbon atom to which they are bonded form an aliphatic ring, especially the cyclopentyl or cyclohexyl ring,

*n* represents a number from 1 to 10, and

X represents the radical of an amine of the formula $-N(R^4)(R^5)$ in which $R^4$ and $R^5$ represent alkyl radicals having from 1 to 4 carbon atoms or cycloalkyl radicals having from 3 to 8 carbon atoms, or an ammonium group of the general formula

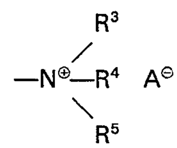

IV

in which

$R^3$ represents hydrogen or an alkyl radical having from 1 to 4 carbon atoms,

$R^4$ and $R^5$ have the meanings given in claim 1, and

A represents a salt-forming anion, with the exception of N - (N',N' - 2,2 - tetramethyl - 3 - aminopropyl) - acrylamide.

9. Use of products according to claim 8 for the manufacture of ion exchangers.

**Claims for Contracting State: AT**

1. Process for the manufacture of α,β-unsaturated N-substituted carboxylic acid amides of the general formula

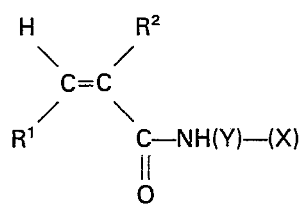

I

in which

$R^1$ and $R^2$ represent hydrogen or methyl,

Y represents a divalent straight-chain or branched organic radical having from 2 to 30, preferably from 2 to 18, carbon atoms, preferably a group of the formula $-(Y_1)_m-(Y_2)_n-(Y_3)_t-$ in which $Y_1$, $Y_2$ and $Y_3$ each represents an alkylene group or the radical of a cyclic organic ring system having 5 or 6 carbon atoms, and the sum of *m*, *n* and *t* is 2 or 3, and

X represents hydrogen or the radical of an amine of the formula $-N(R^4)(R^5)$ in which $R^4$ and $R^5$ represent alkyl radicals having from 1 to 4 carbon atoms or cycloalkyl radicals having from 3 to 8 carbon atoms, characterised in that β-substituted carboxylic acid amides of the general formula

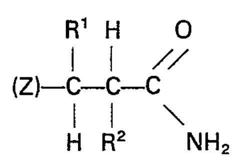

III

in which

$R^1$ and $R^2$ represent hydrogen or methyl, and

Z represents a hydroxy group or the radical of an alcohol of the formula $R^8O$— in which $R^8$ represents an alkyl radical having from 1 to 4 carbon atoms, are reacted with primary amines of the general formula

$$H_2N—(Y)—(X) \quad II$$

in which Y and X have the meanings given above, at temperatures of from 100° to 200°C, optionally with the addition of catalytic amounts of acid, with ammonia being eliminated, to form N-substituted β-hydroxy- or β-alkoxy-carboxylic acid amides, and these are converted by heating in the gaseous phase in the presence of catalysts into the α,β-unsaturated N-substituted carboxylic acid amides of the formula I in which X represents hydrogen or the radical —N—($R_4$)—($R_5$), and the resulting N-substituted α,β-unsaturated carboxylic acid amides are optionally quaternised or converted into an amine salt in known manner.

2. Process according to claim 1, characterised in that for the reaction there are used amines of the general formula

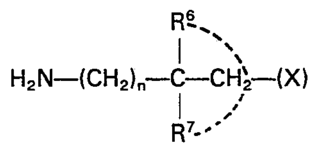

II′

in which

$R^6$ and $R^7$ represent alkyl groups, preferably lower alkyl groups having from 1 to 4 carbon atoms, especially methyl groups, or aryl groups, or together with the carbon atom to which they are bonded form an aliphatic ring, especially the cyclohexyl or cyclopentyl radical,

$n$ represents a number from 0 to 10, and

X represents the radical of an amine of the formula —N($R^4$)($R^5$) in which $R^4$ and $R^5$ represent alkyl radicals having from 1 to 4 carbon atoms or cycloalkyl radicals having from 3 to 8 carbon atoms.

3. Process according to claims 1 and 2, characterised in that the resulting N-substituted β-hydroxy- or β-alkoxy-carboxylic acid amides are vapourised under mild conditions.

4. Process according to claims 1 to 3, characterised in that the N-substituted β-hydroxy- or β-alkoxy-carboxylic acid amides are converted by passing their vapours over solid catalysts into the desired α,β-unsaturated N-substituted carboxylic acid amides.

5. Process according to claims 1 to 4, characterised in that for the transamidation acetic acid is used as catalyst in an amount of from 0.5 to 1 mol %.

6. Process according to claims 1 to 5, characterised in that as solid catalysts for the dehydration of the β-hydroxycarboxylic acid amides there are used metal oxides, preferably aluminium oxide/silicon dioxide, or impregnated carrier catalysts, preferably acidic aluminium oxide, or pumice impregnated with phosphoric acid, or salts, preferably aluminium phosphate or boron phosphate, and for the removal of alcohol from the β-alkoxycarboxylic acid amides there are used inorganic oxides having an acidic or basic character, preferably aluminium oxide, silicon dioxide or barium oxide, optionally impregnated with acids or bases.

7. Process according to claims 1 to 6, characterised in that the dehydration of the β-hydroxycarboxylic acid amides or the removal of alcohol from the β-alkoxycarboxylic acid amides is carried out in a temperature range of from 200° to 400°C.

8. Use of products according to claim 2 in which

$n$ represents a number from 1 to 10,

X in the case of the quaternised derivative or the amine salt of the radical —N($R_4$)($R_5$), represents an ammonium group of the general formula

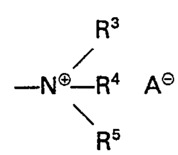

IV

in which

$R^3$ represents hydrogen or an alkyl radical having from 1 to 4 carbon atoms,

$R^4$ and $R^5$ have the meanings given in claim 2, and

A represents a salt-forming anion, and N - (N′,N′ - 2,2 - tetramethyl - 3 - aminopropyl) - acrylamide is excepted, for the manufacture of ion exchangers.

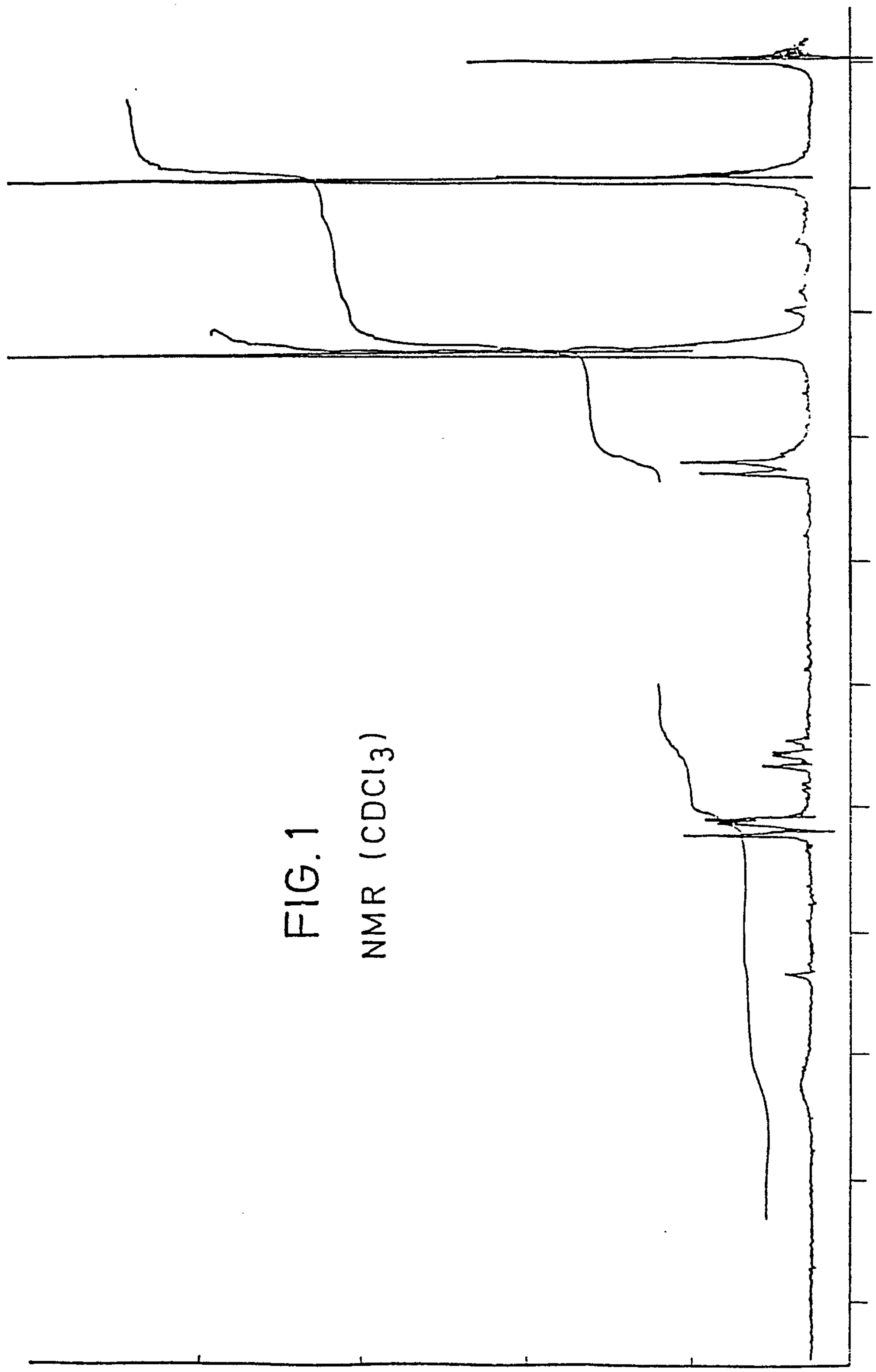

FIG. 1

NMR ($CDCl_3$)

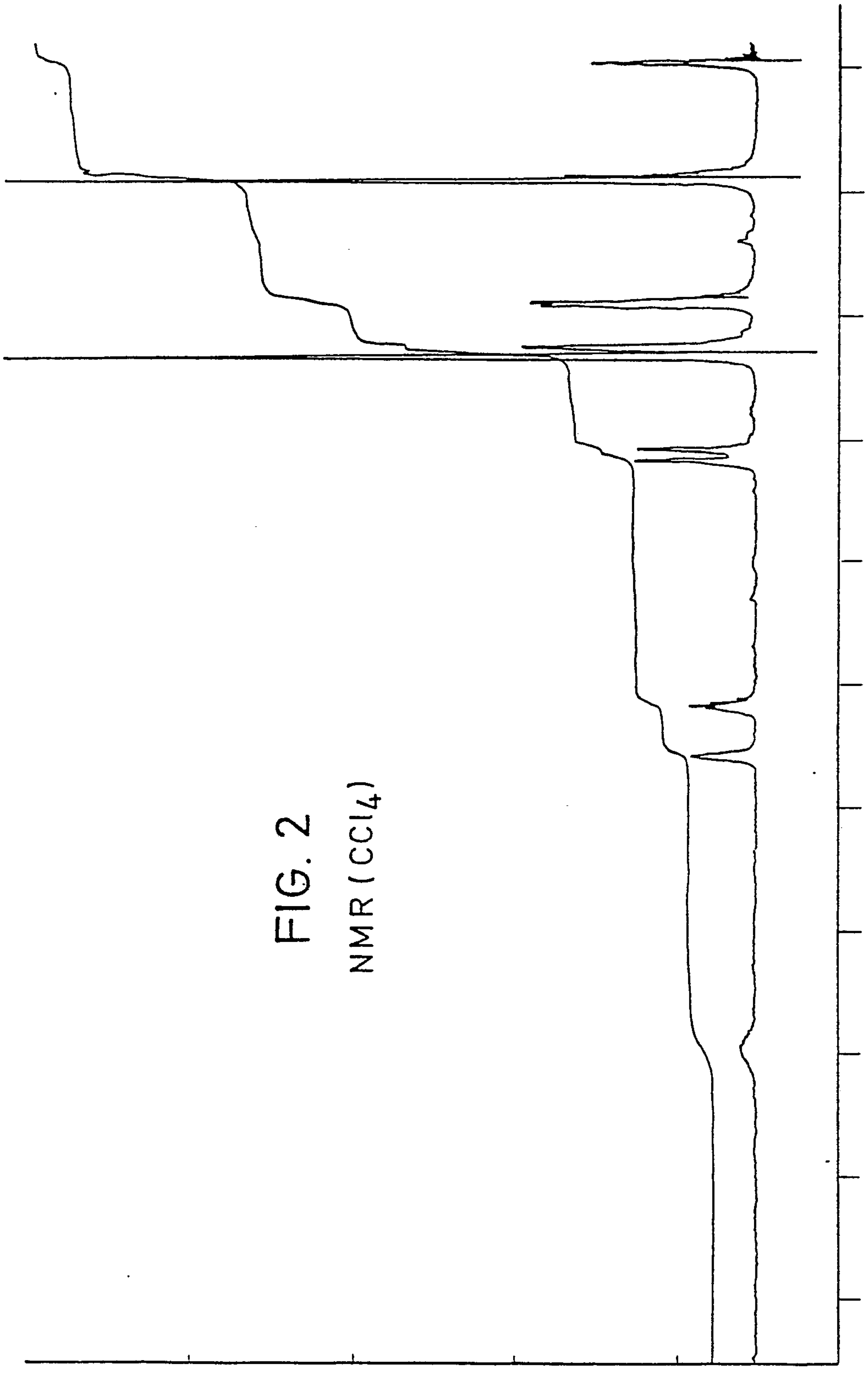

FIG. 2

NMR ($CCl_4$)

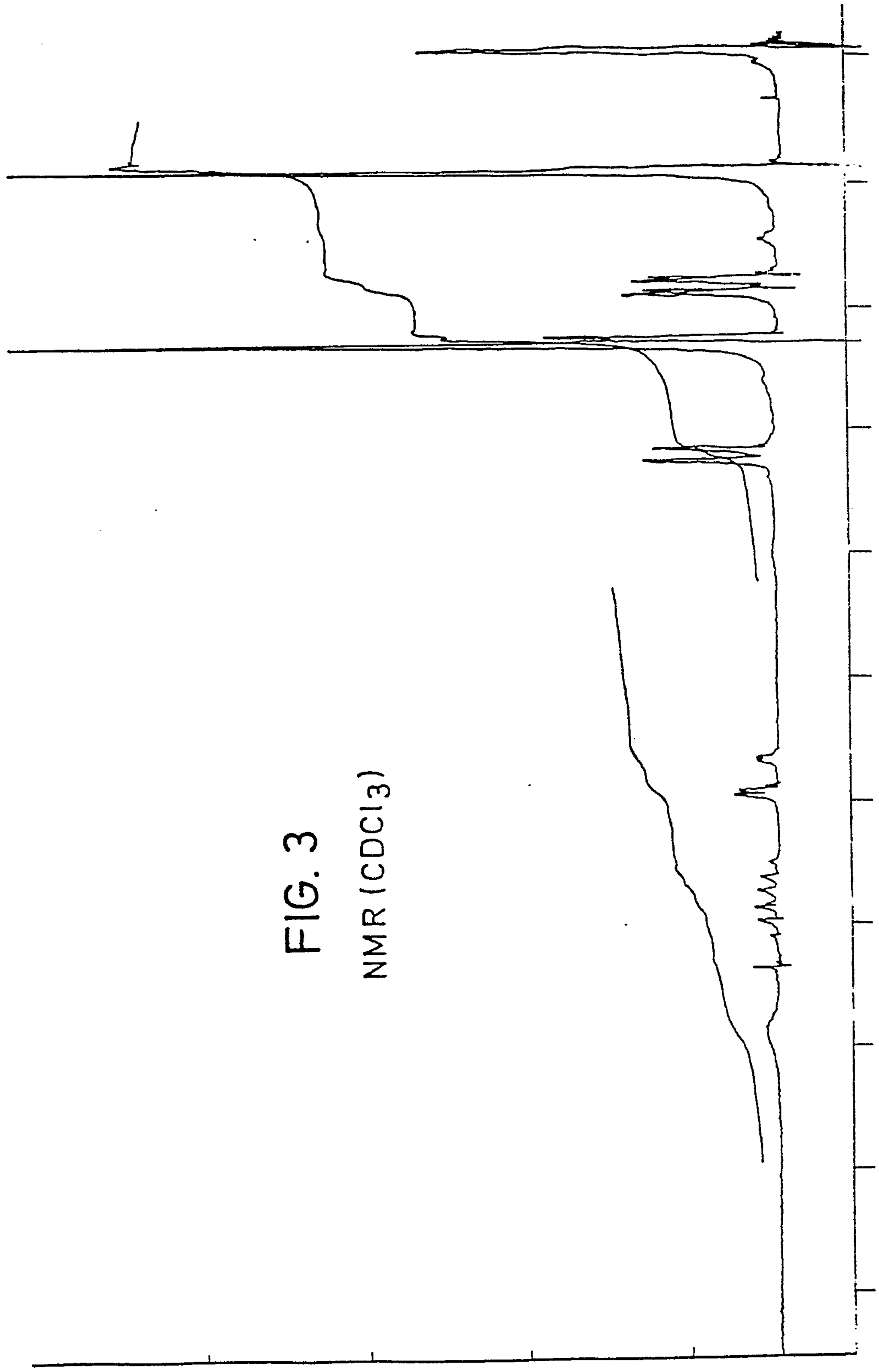

FIG. 3

NMR ($CDCl_3$)

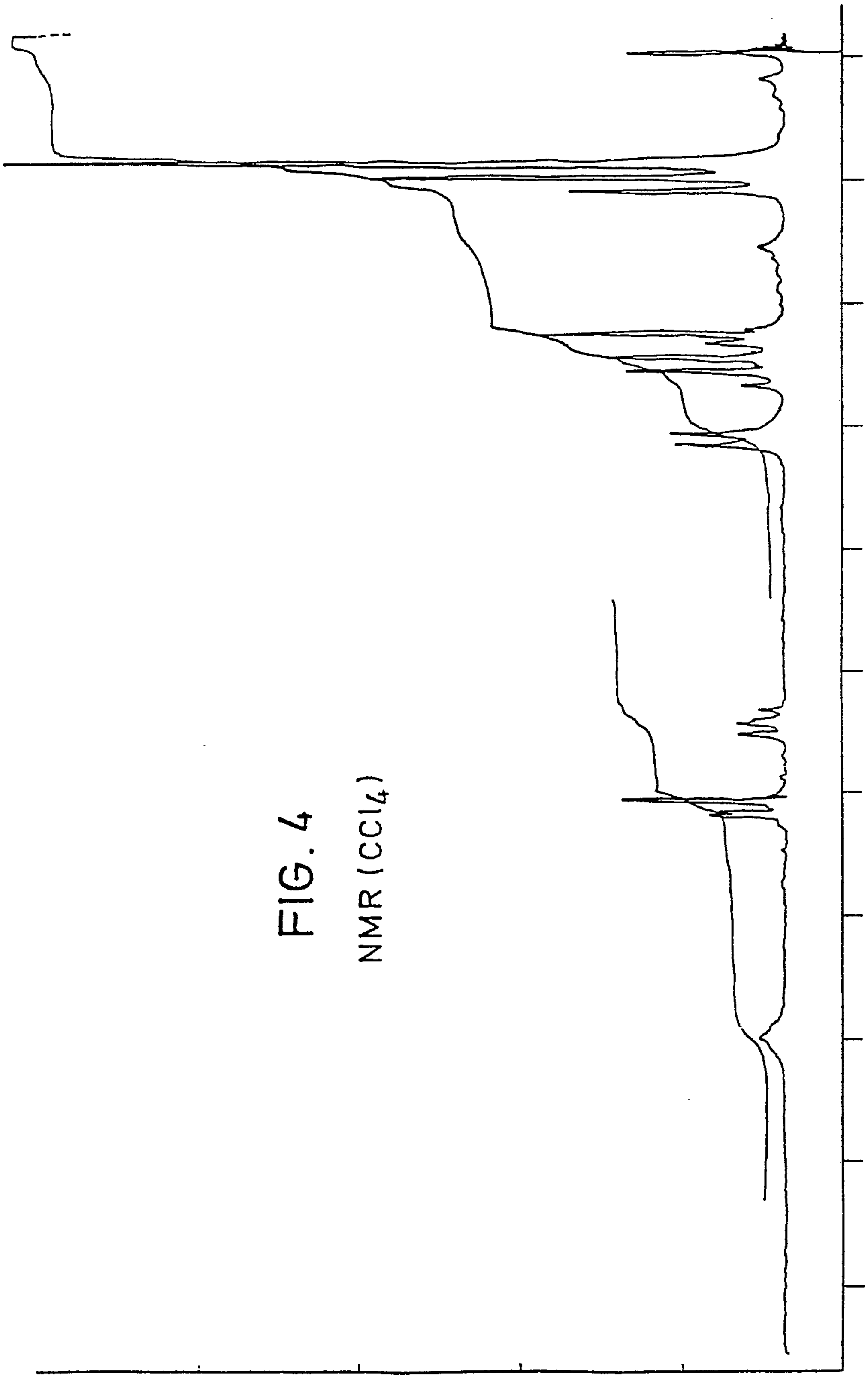

FIG. 4

NMR ($CCl_4$)

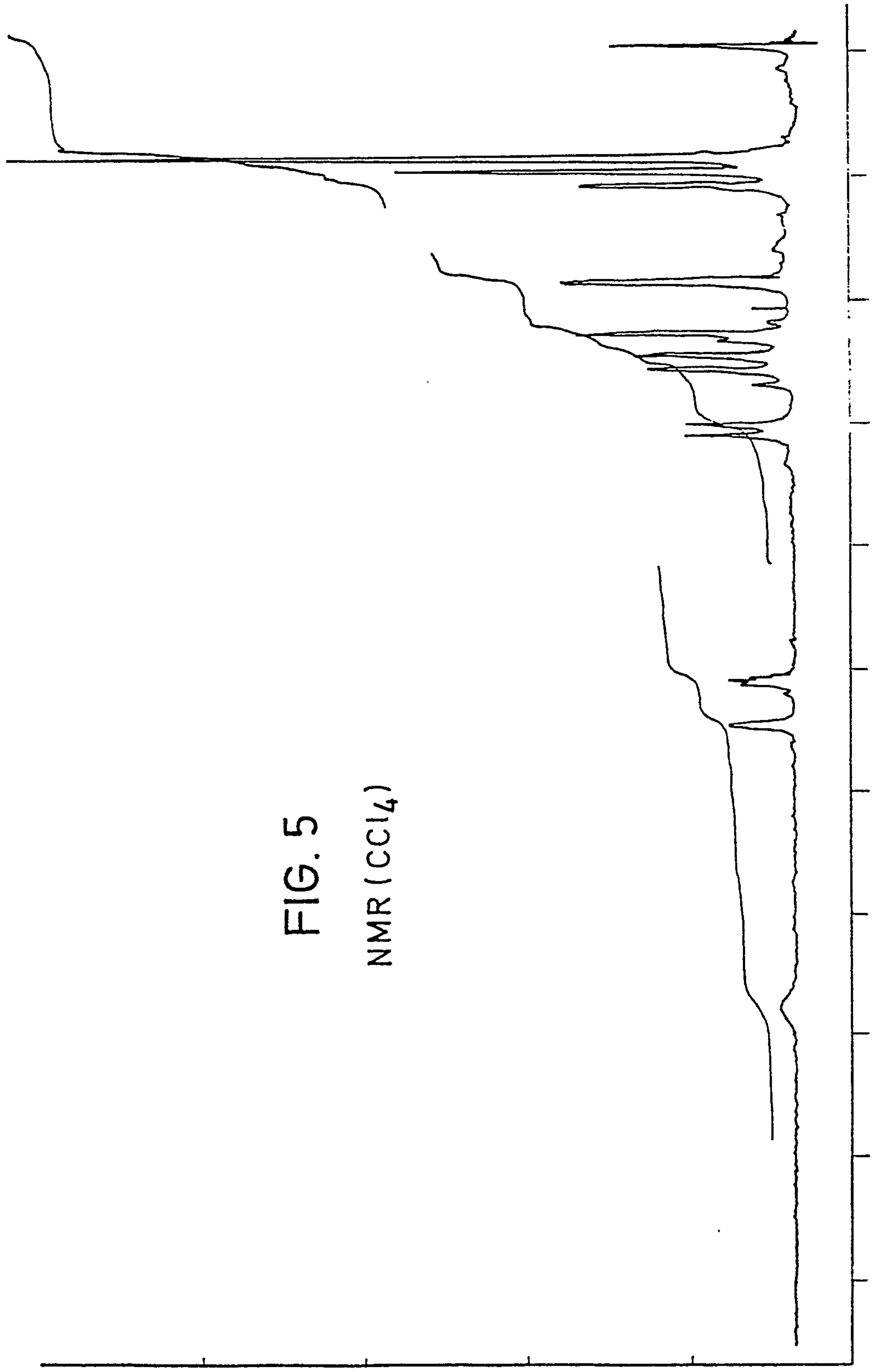

FIG. 5
NMR ($CCl_4$)

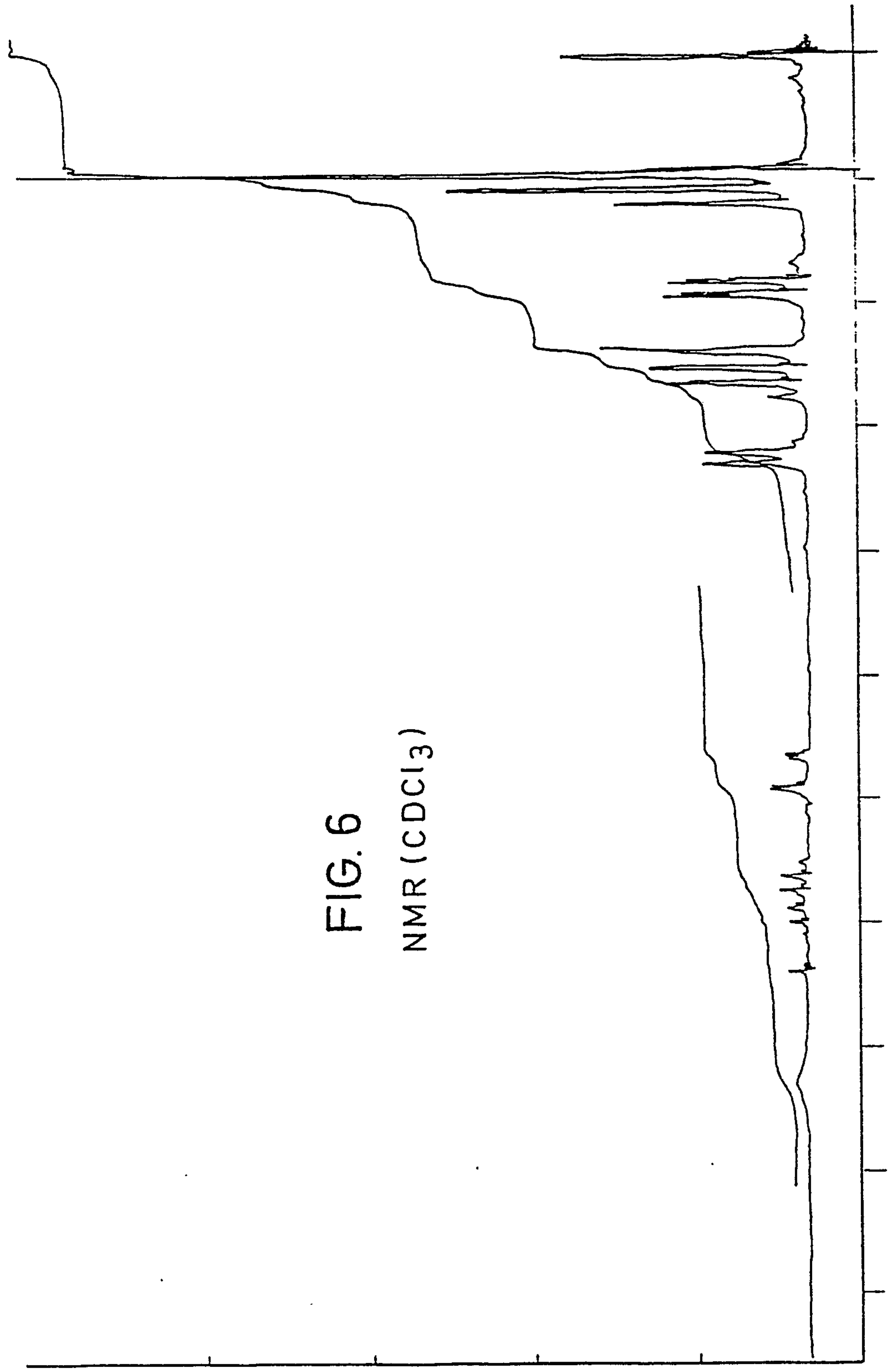

FIG. 6
NMR ($CDCl_3$)

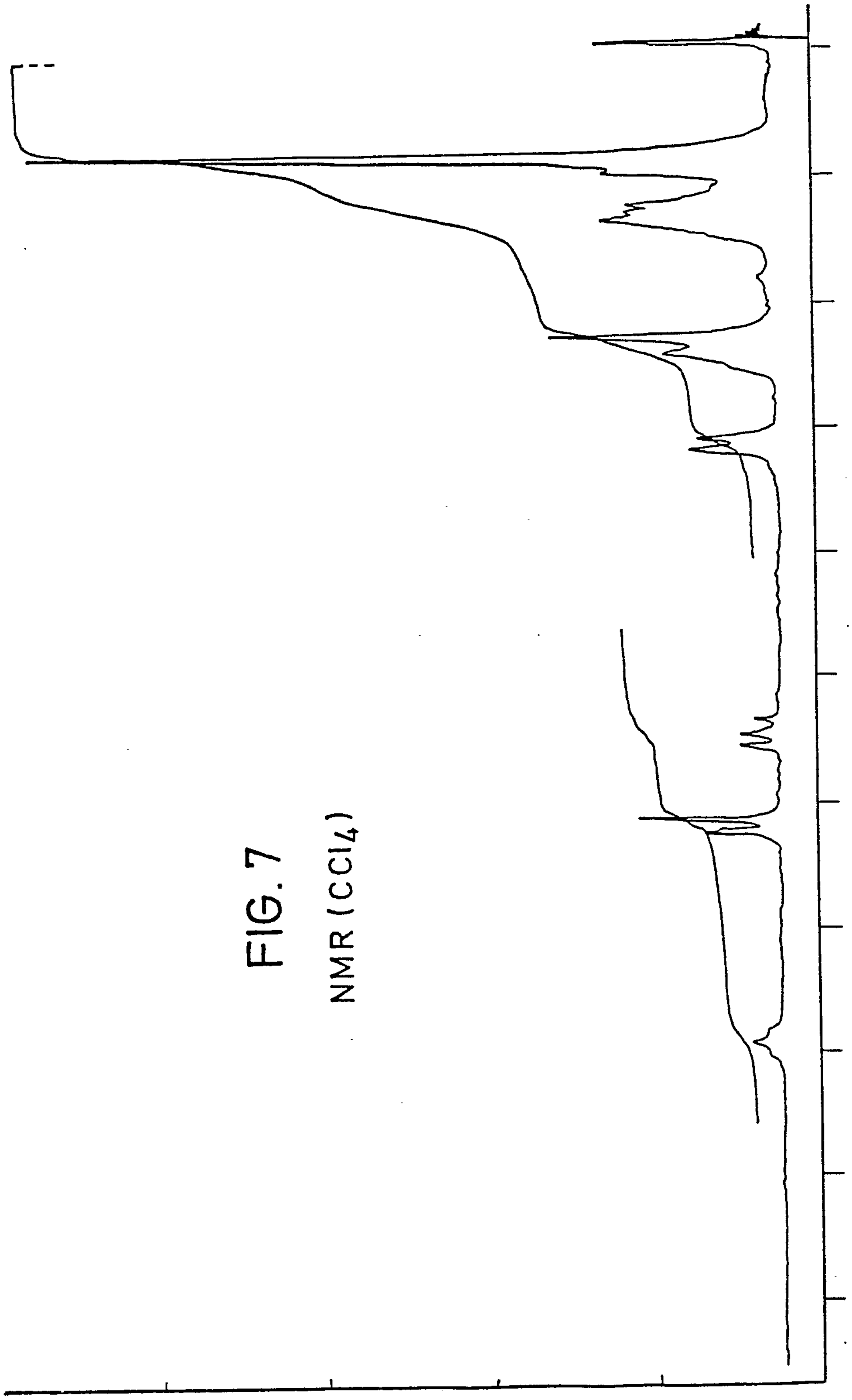

FIG. 7
NMR ($CCl_4$)

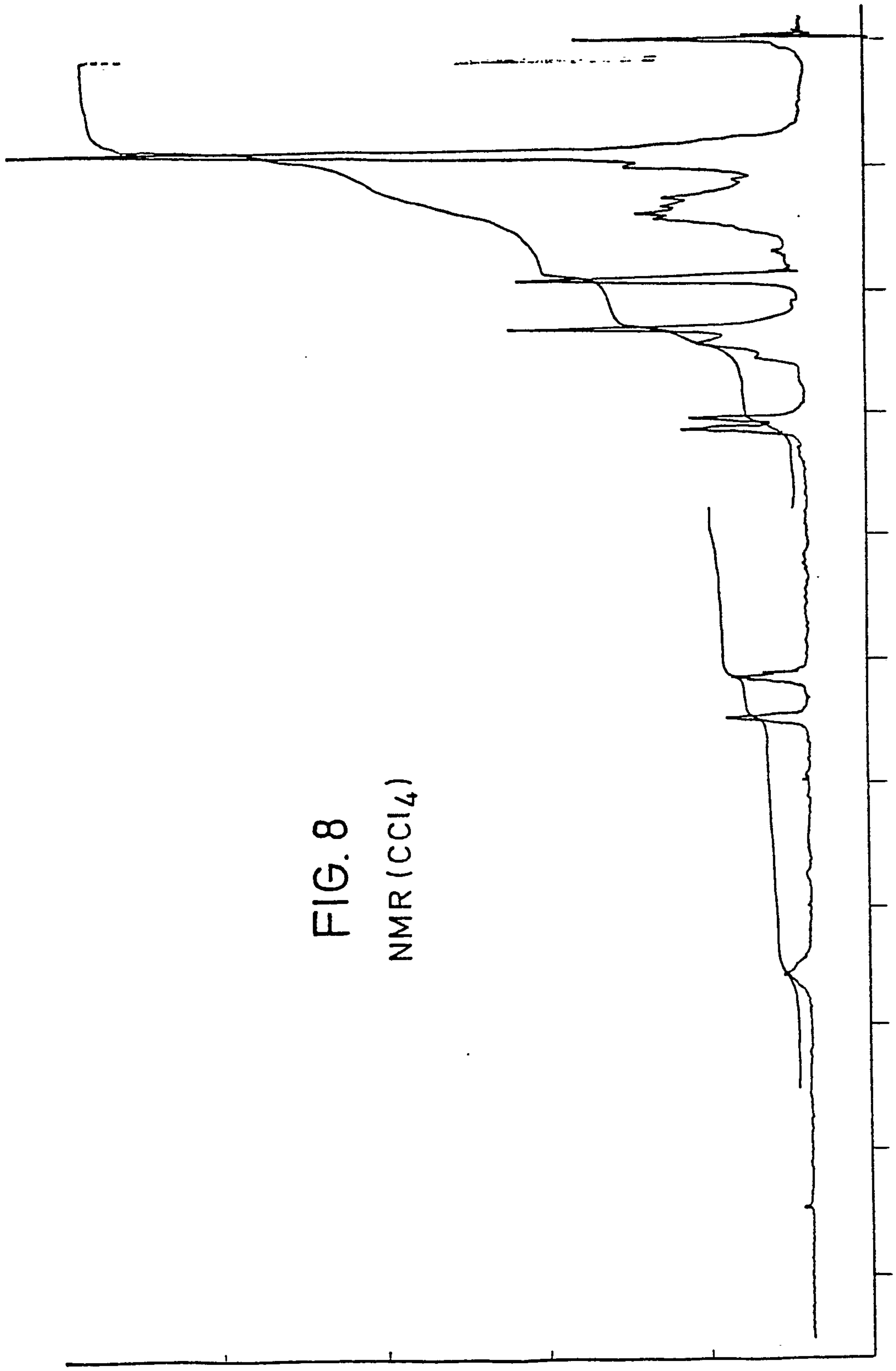

FIG. 8

NMR ($CCl_4$)

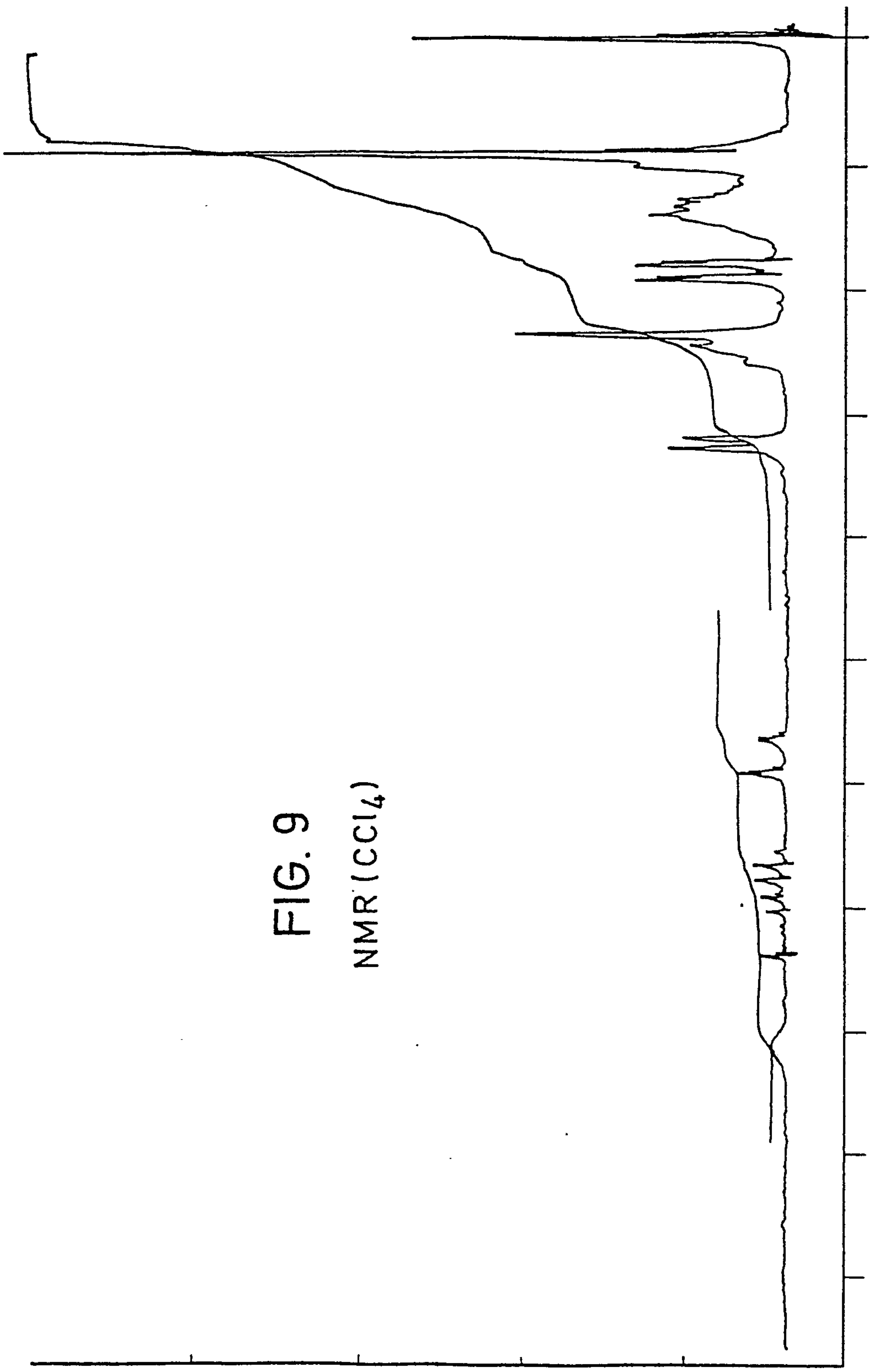

FIG. 9

NMR ($CCl_4$)

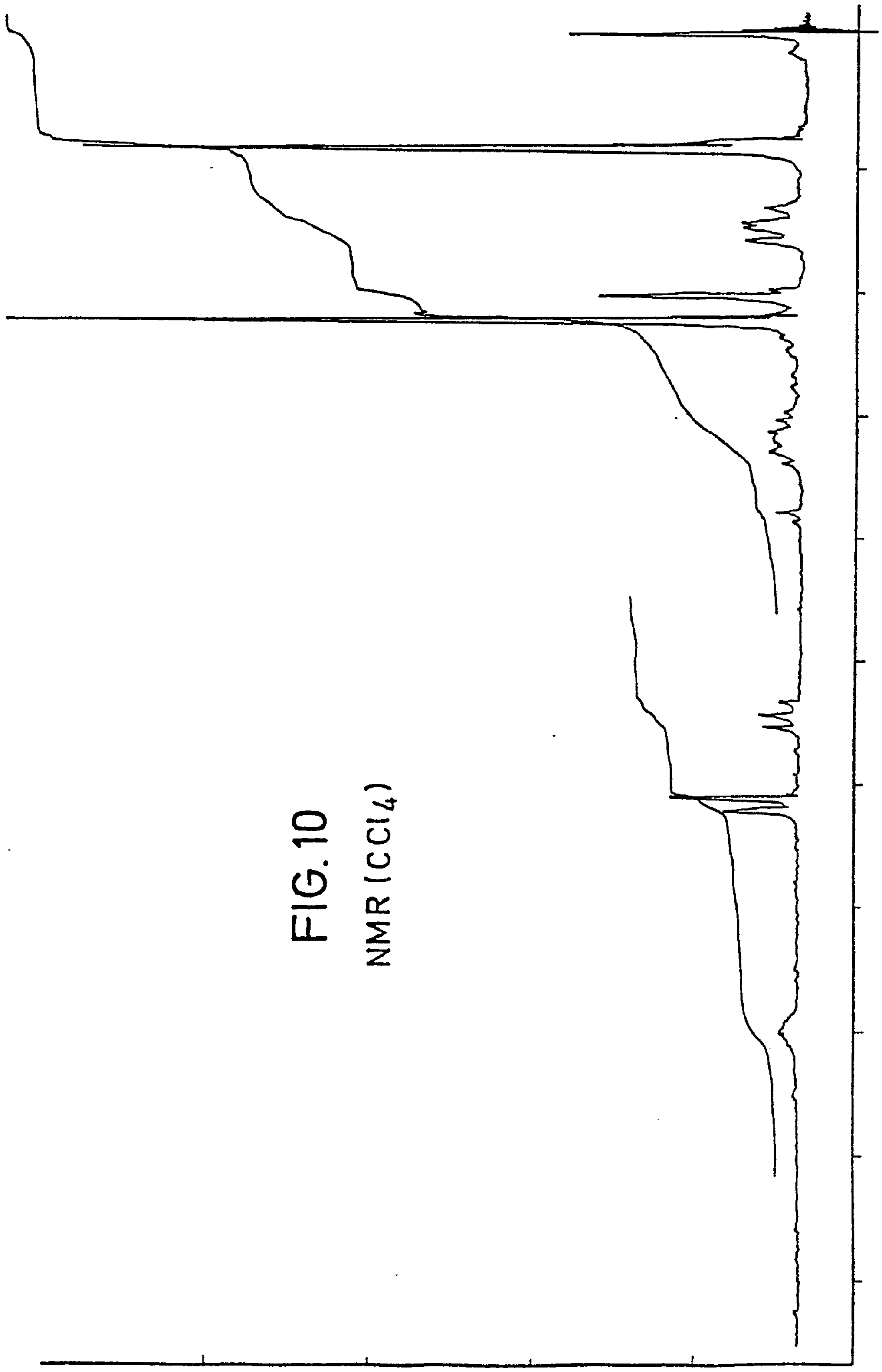

FIG. 10
NMR ($CCl_4$)

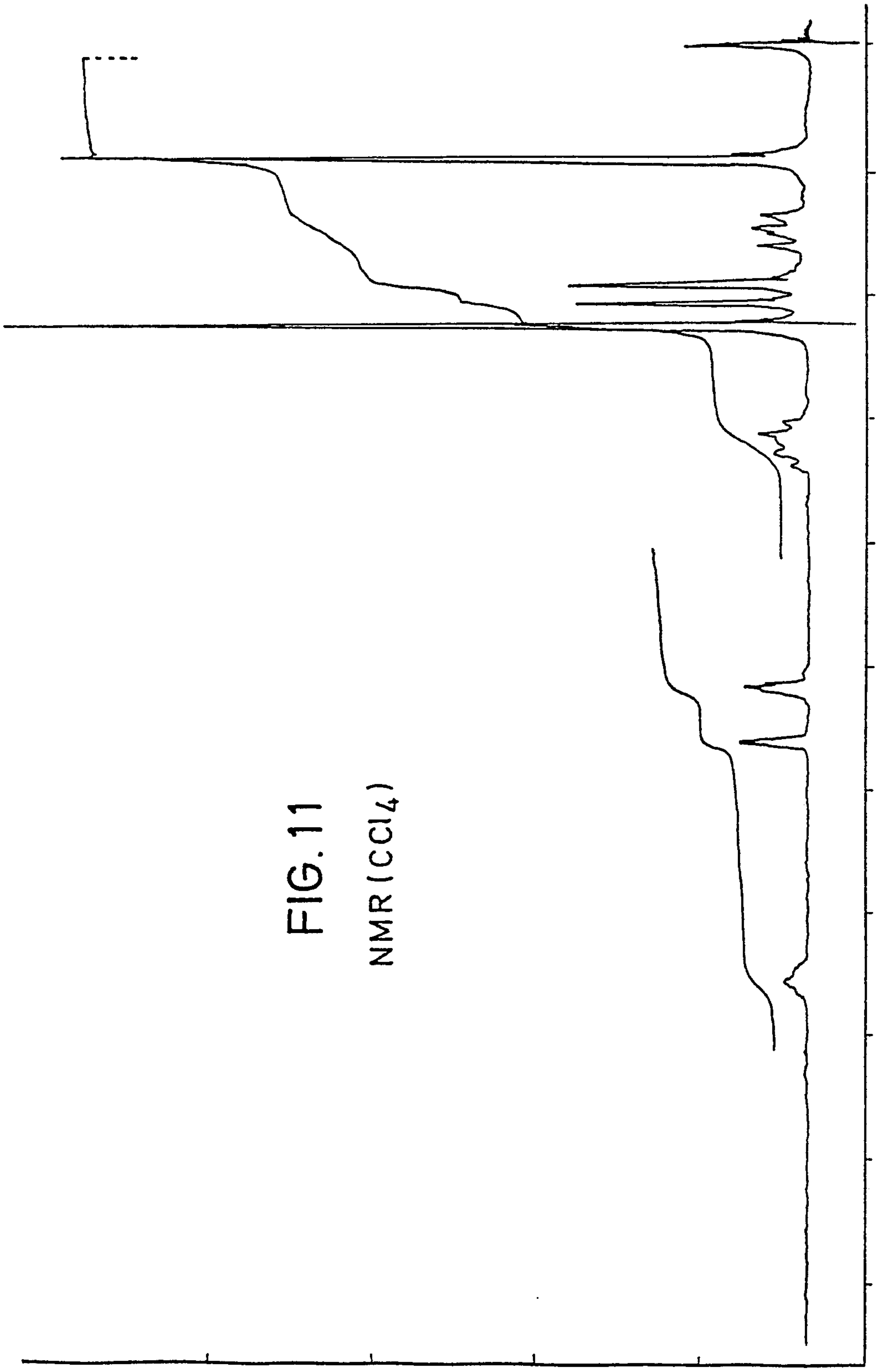

FIG. 11
NMR ($CCl_4$)

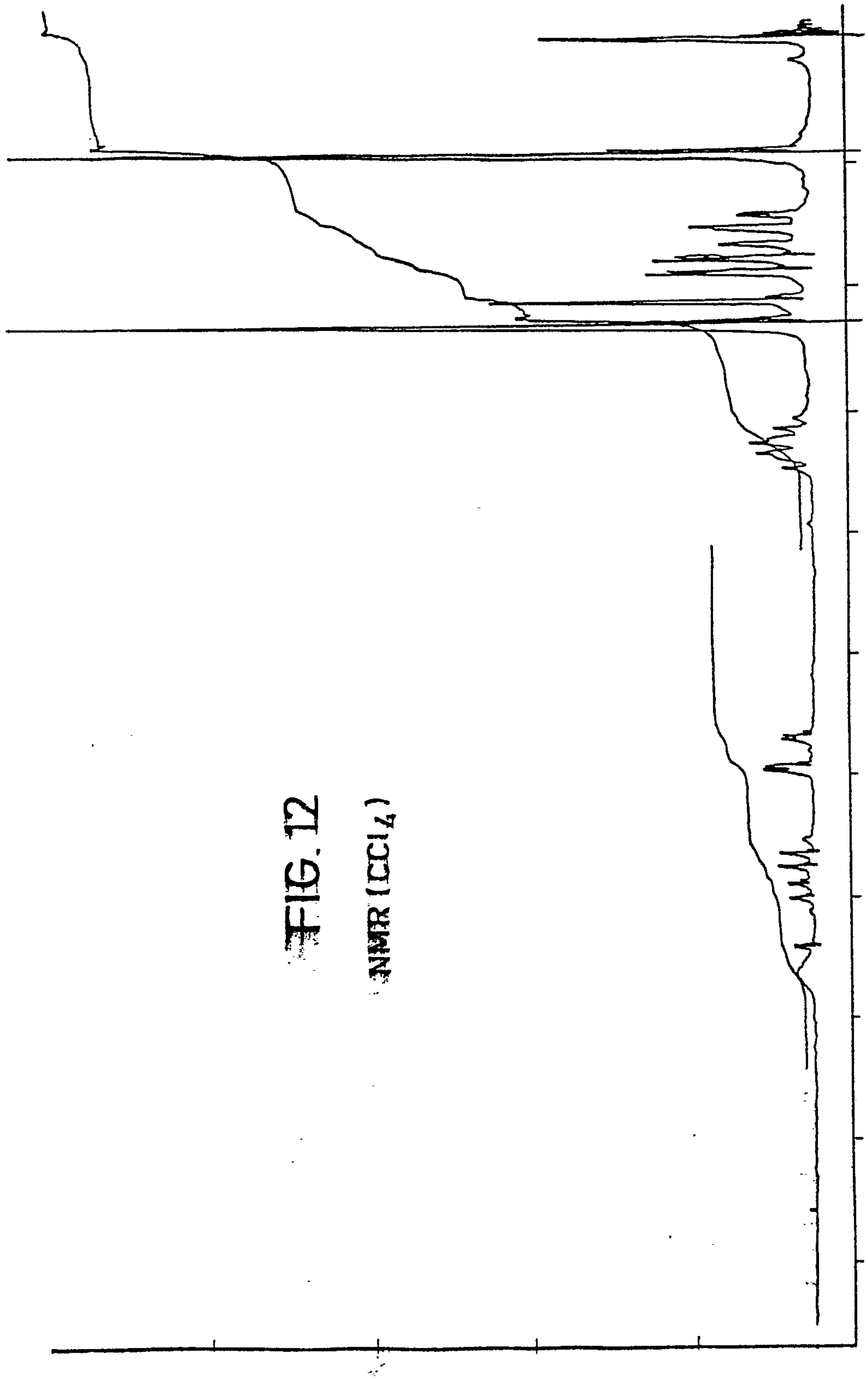

FIG. 12
NMR ($CCl_4$)

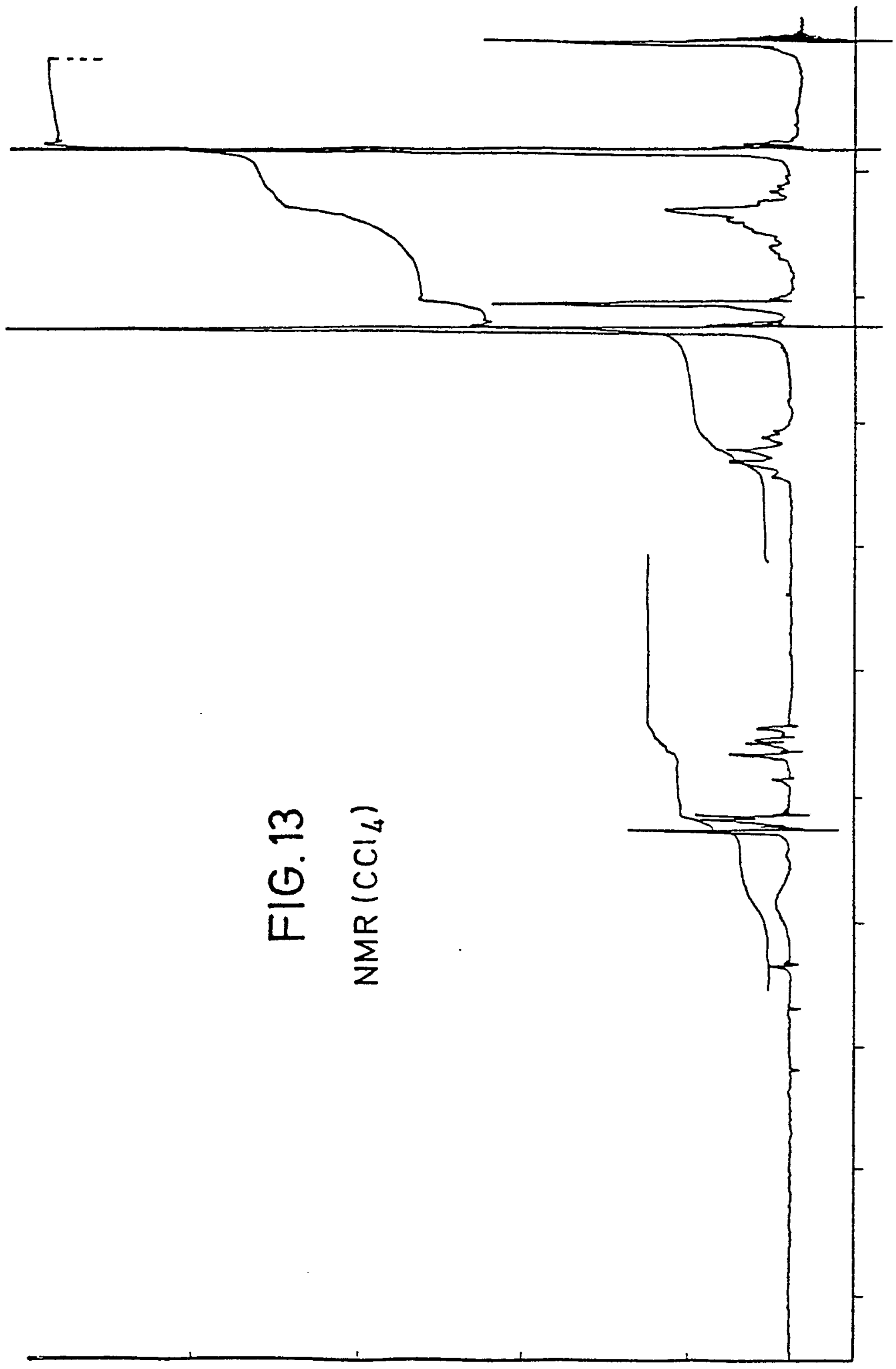

FIG. 13
NMR ($CCl_4$)

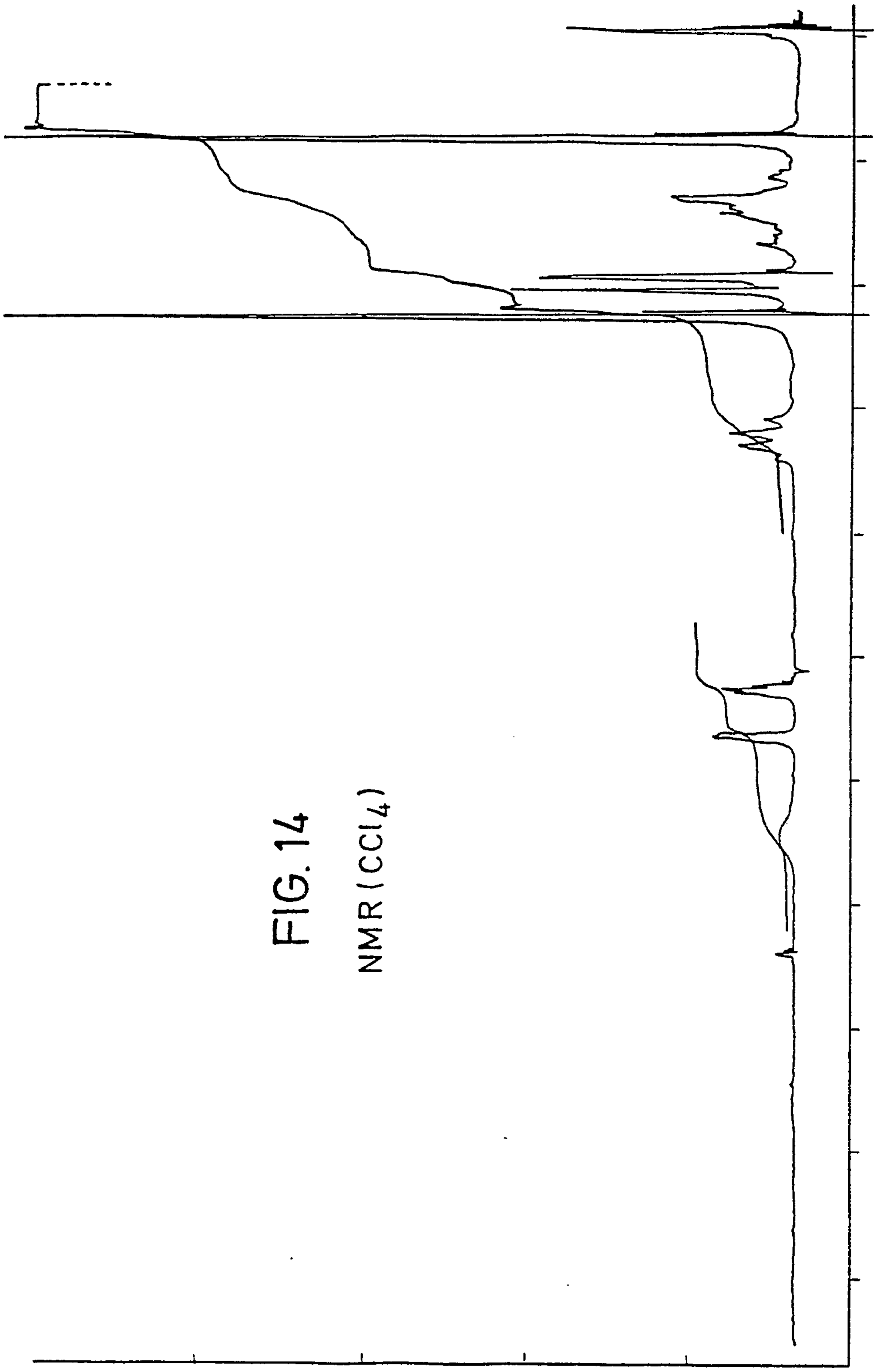

FIG. 14

NMR ($CCl_4$)

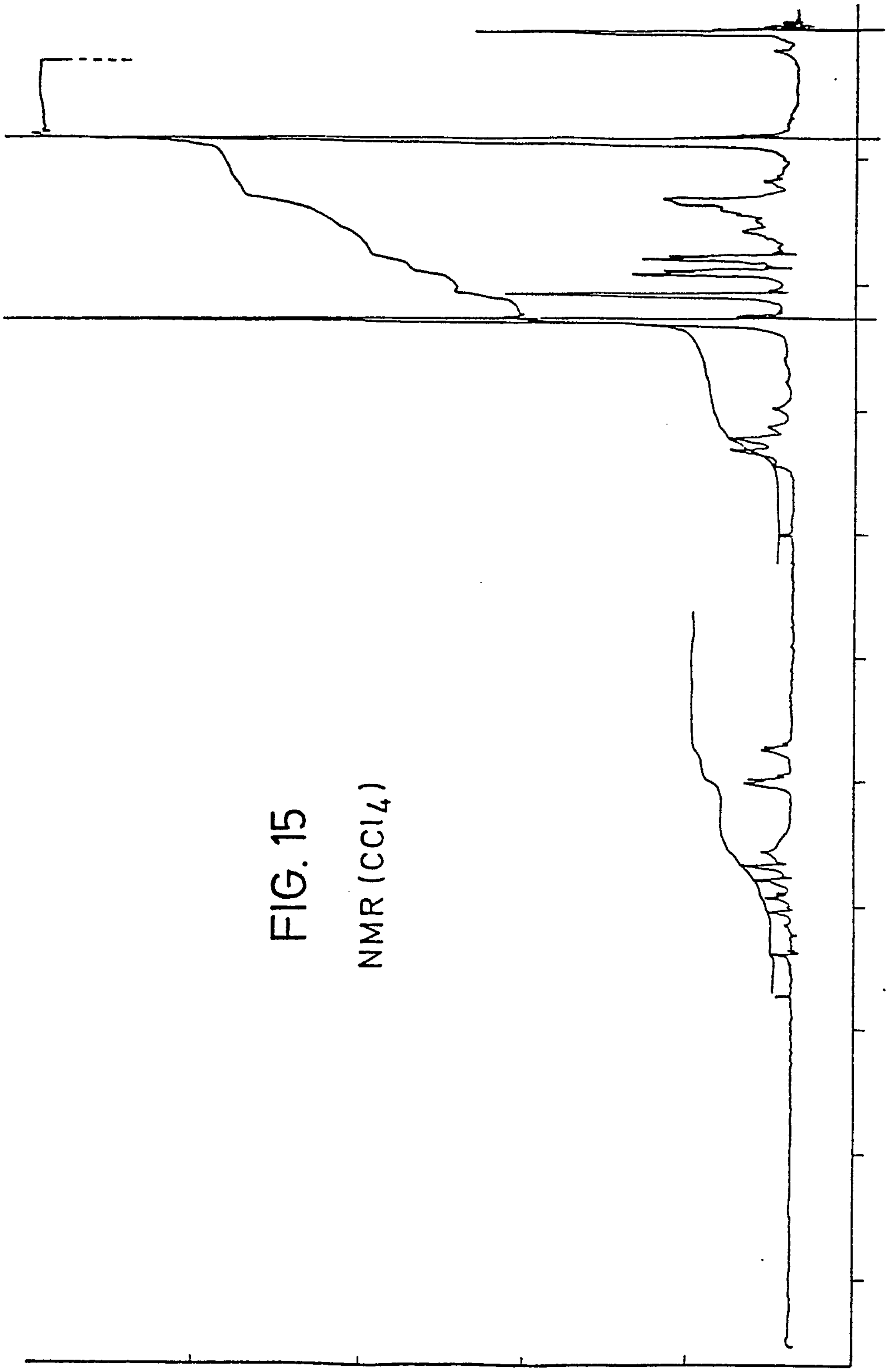

FIG. 15

NMR ($CCl_4$)

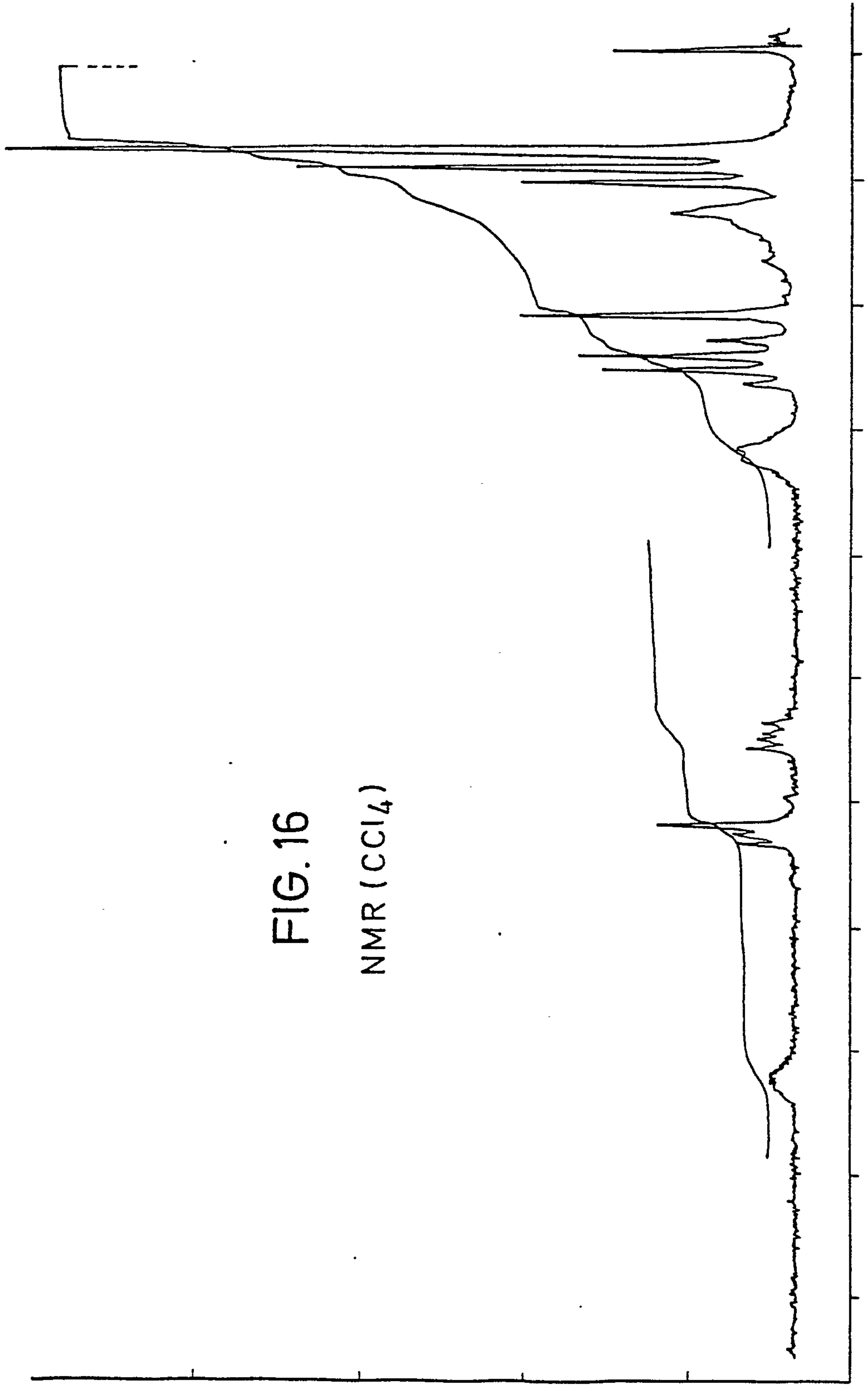

FIG. 16

NMR ($CCl_4$)

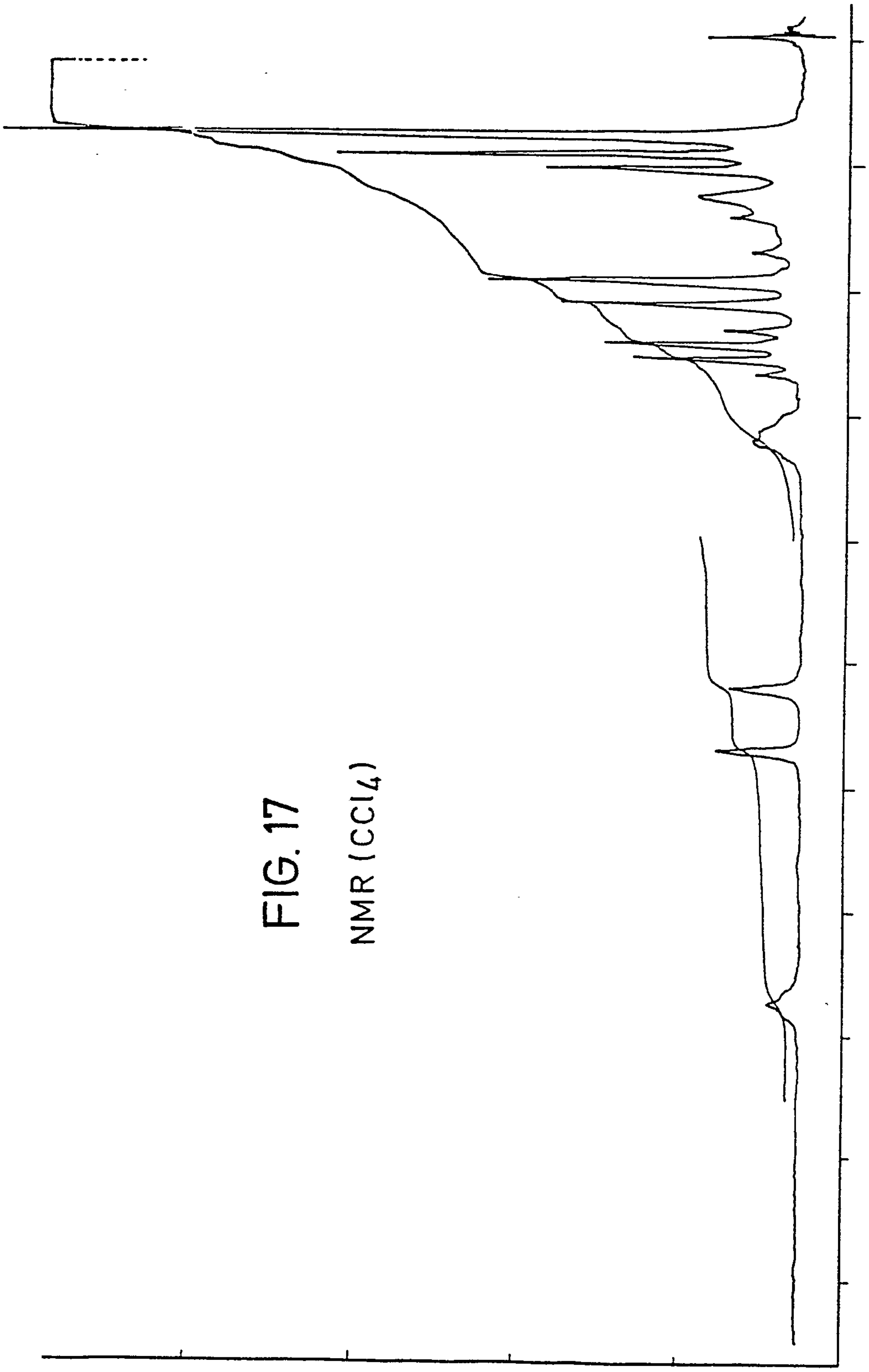

FIG. 17

NMR ($CCl_4$)

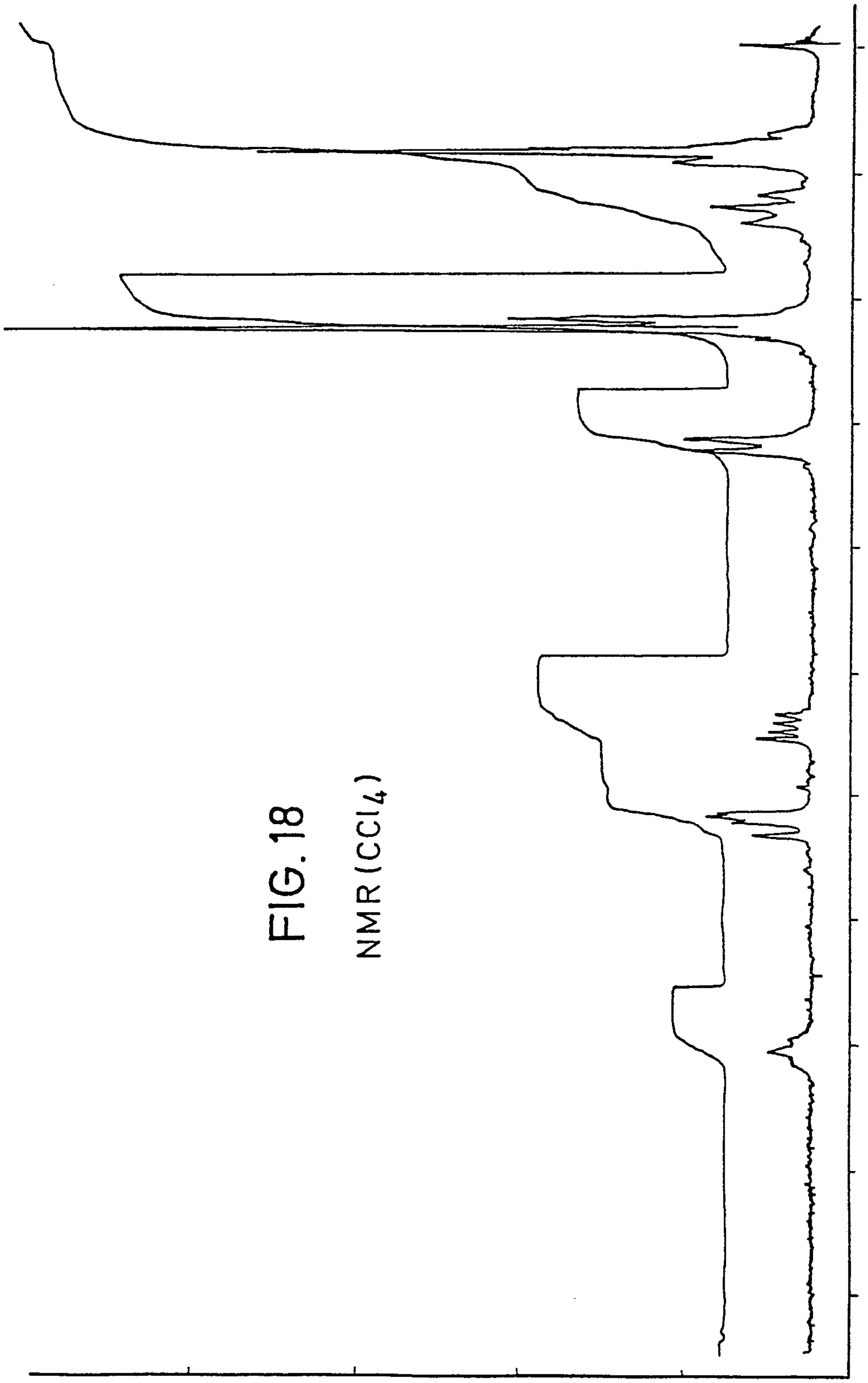

FIG. 18

NMR ($CCl_4$)

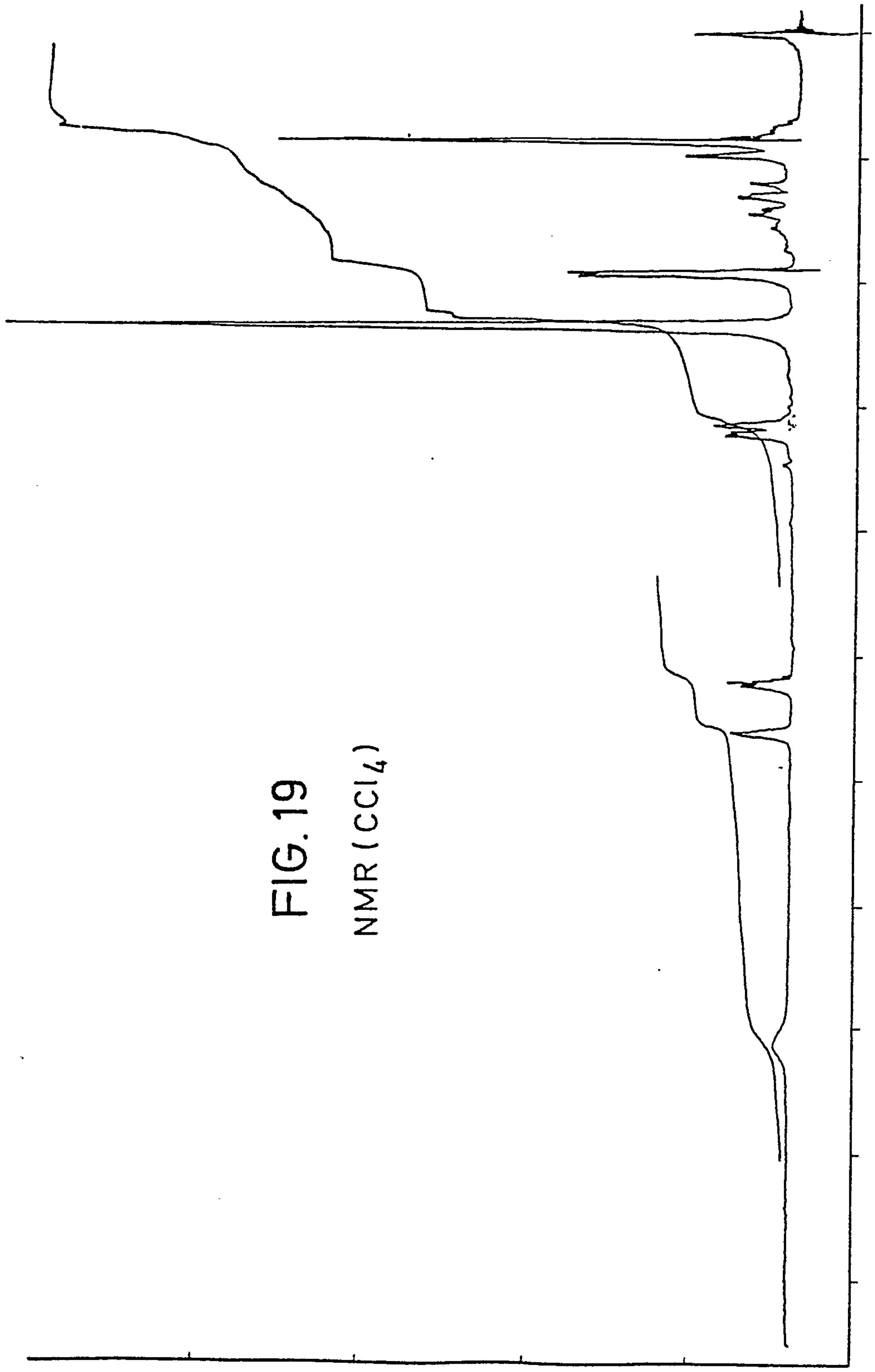

FIG. 19
NMR ($CCl_4$)

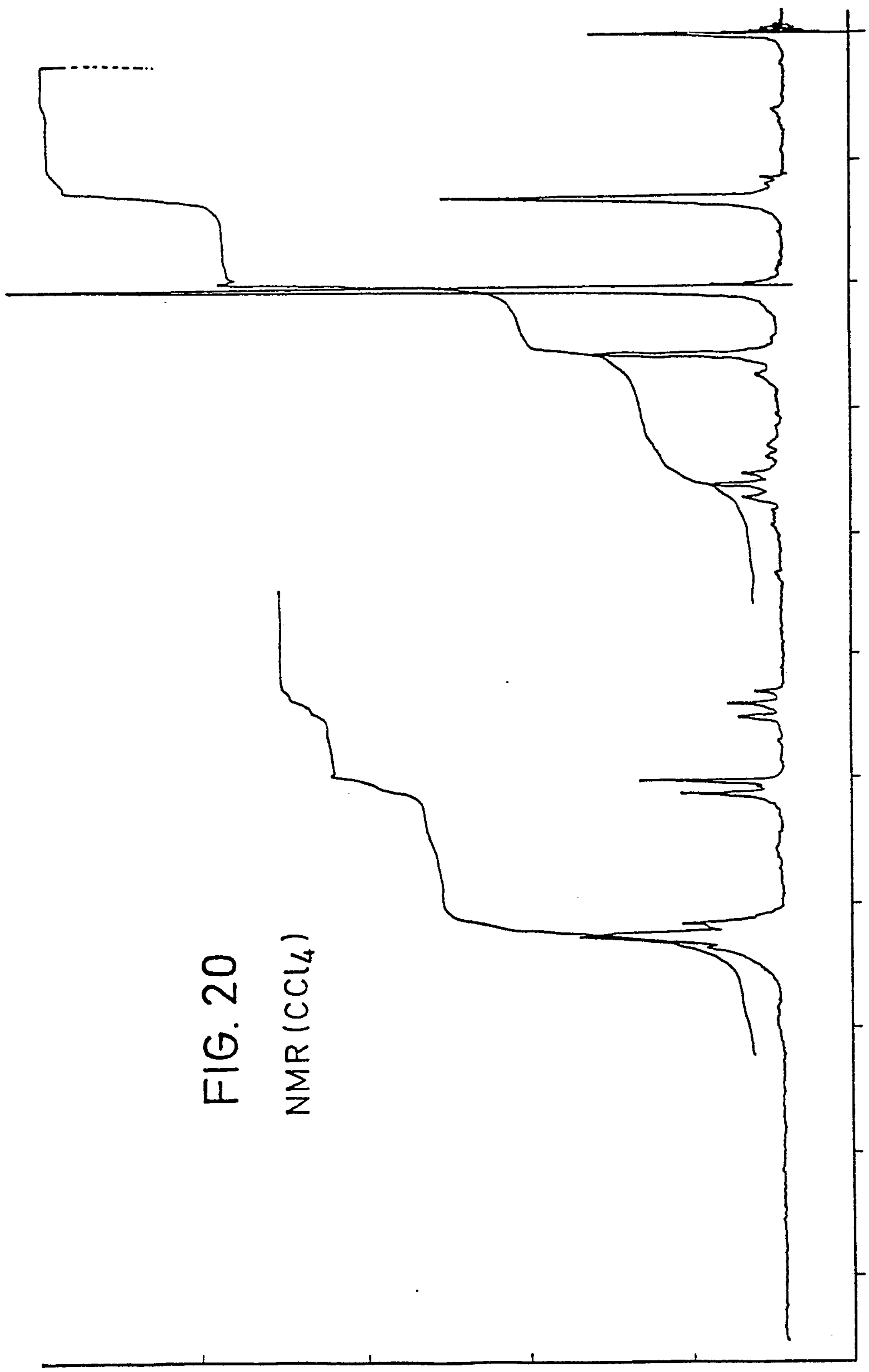

FIG. 20

NMR ($CCl_4$)

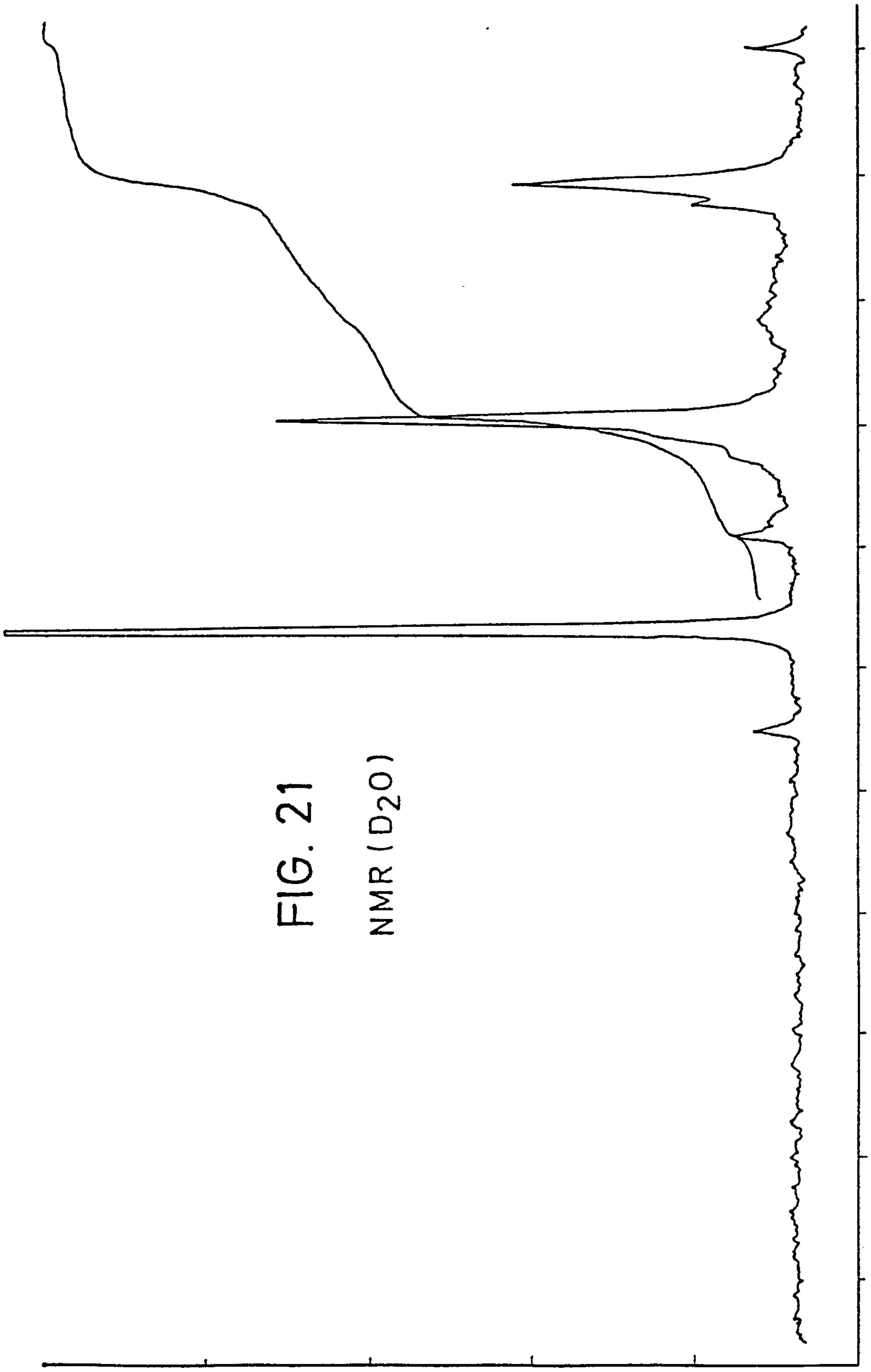

FIG. 21

NMR ($D_2O$)

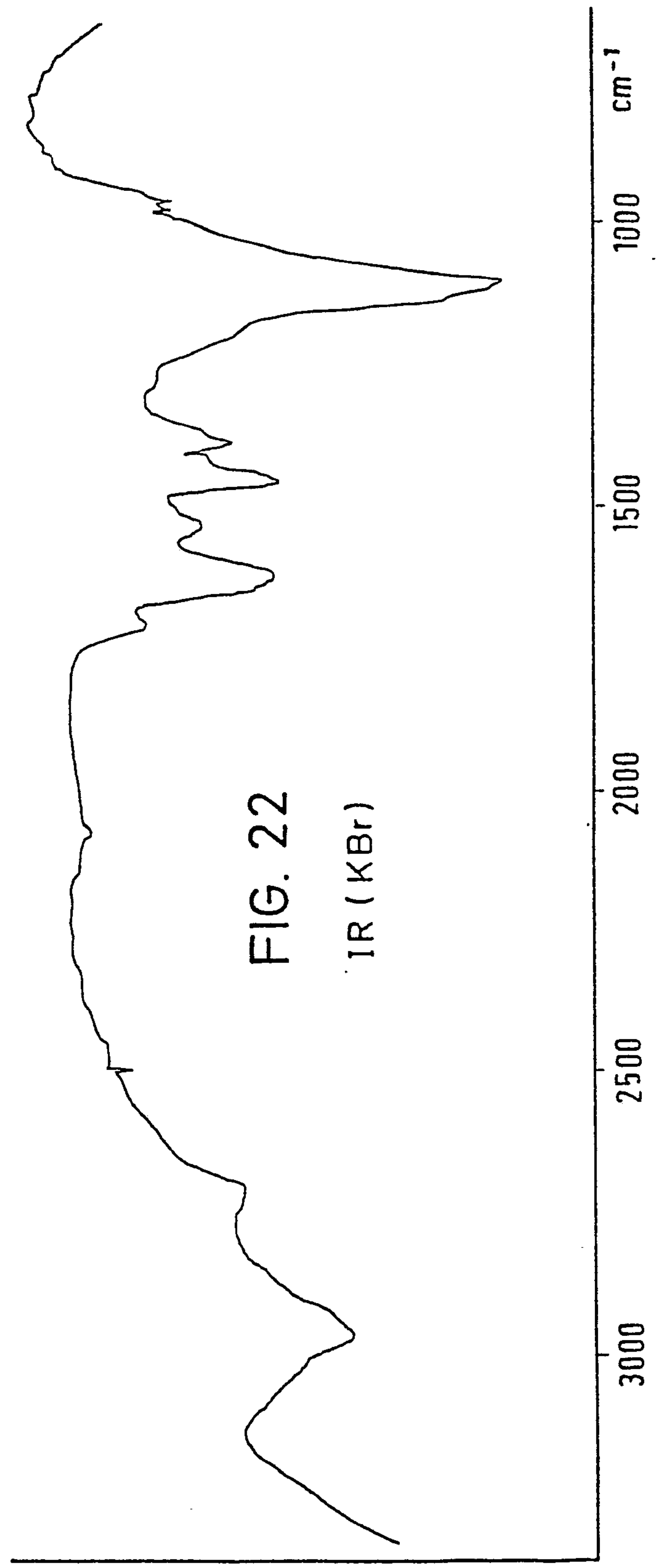


FIG. 22

IR (KBr)

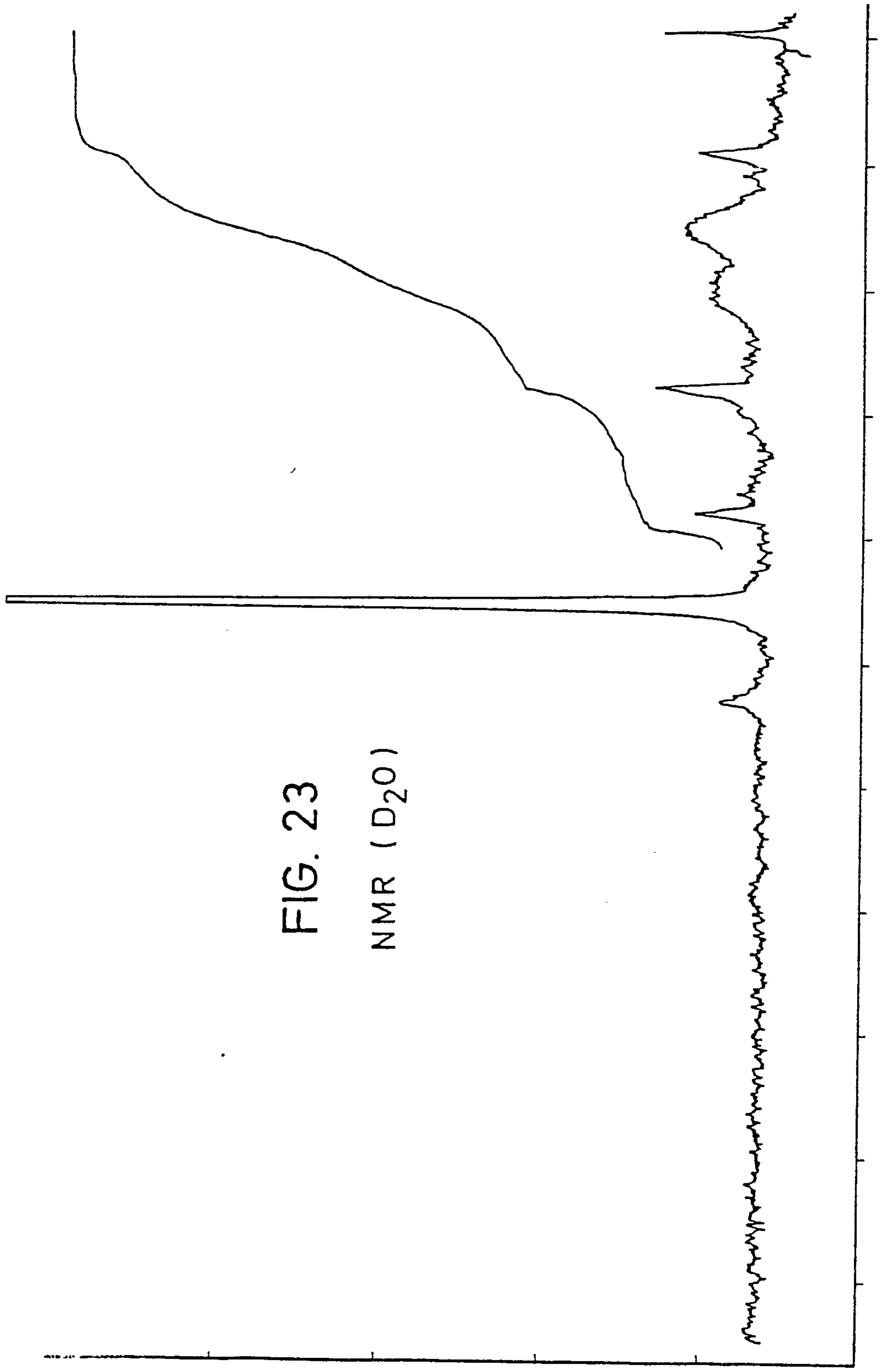

FIG. 23
NMR ( $D_2O$ )

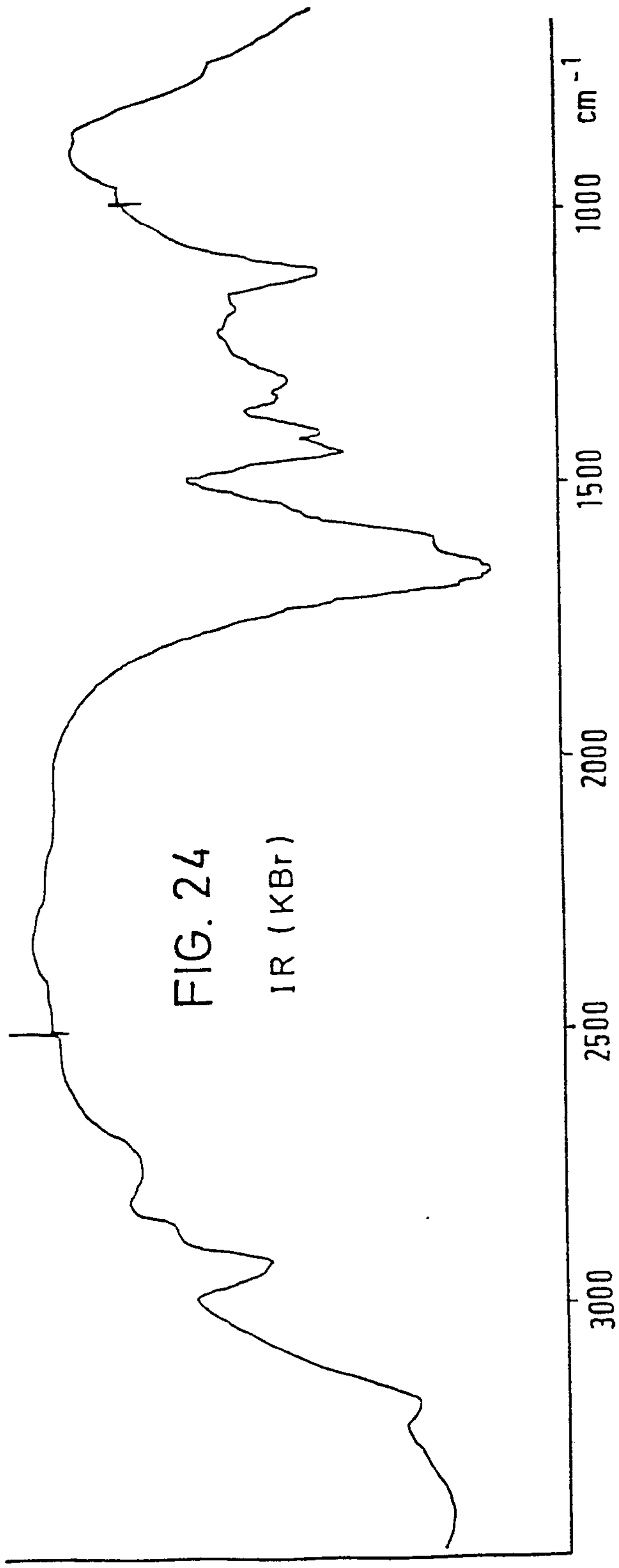


FIG. 24
IR (KBr)

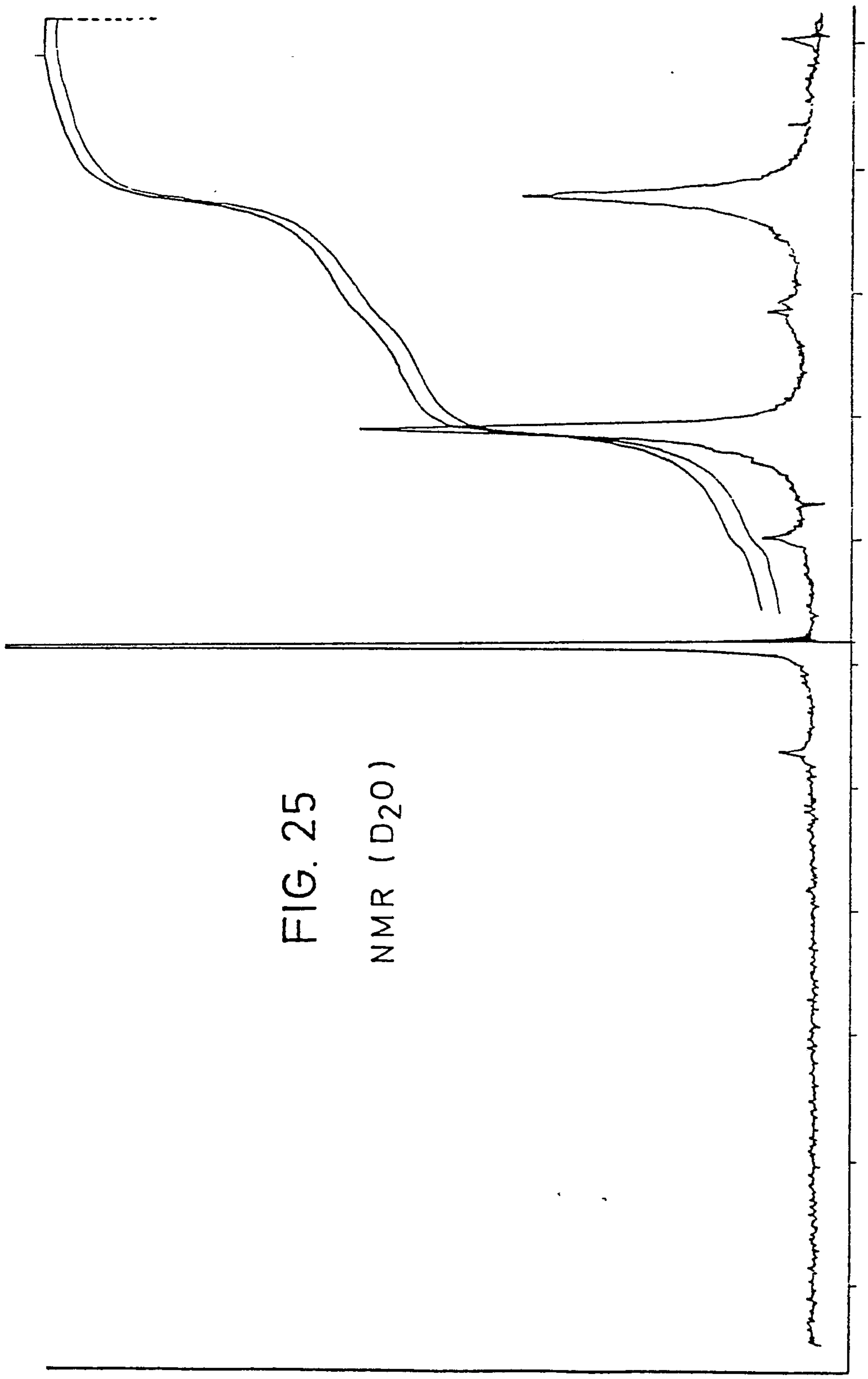

FIG. 25
NMR ($D_2O$)

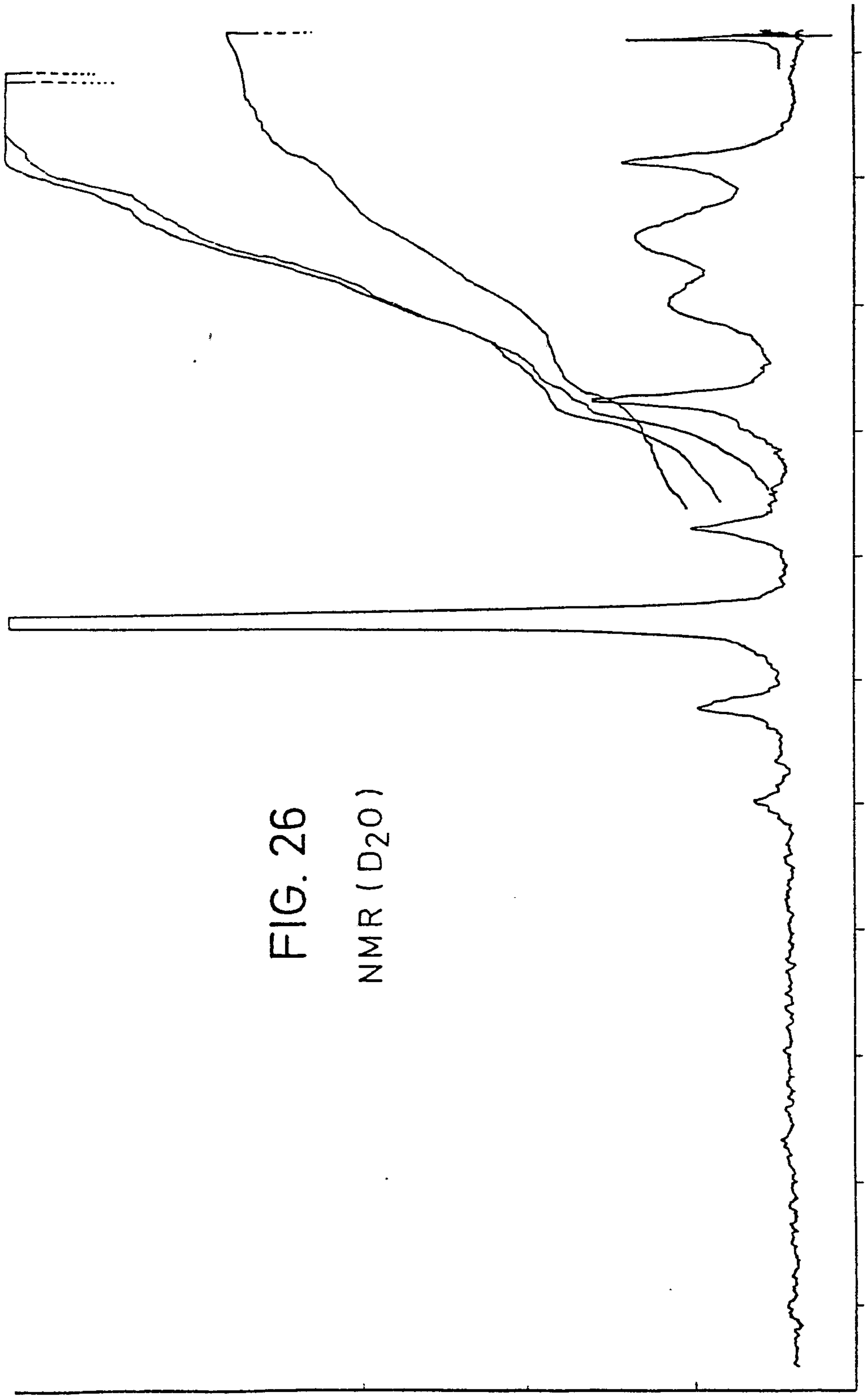

FIG. 26
NMR ($D_2O$)

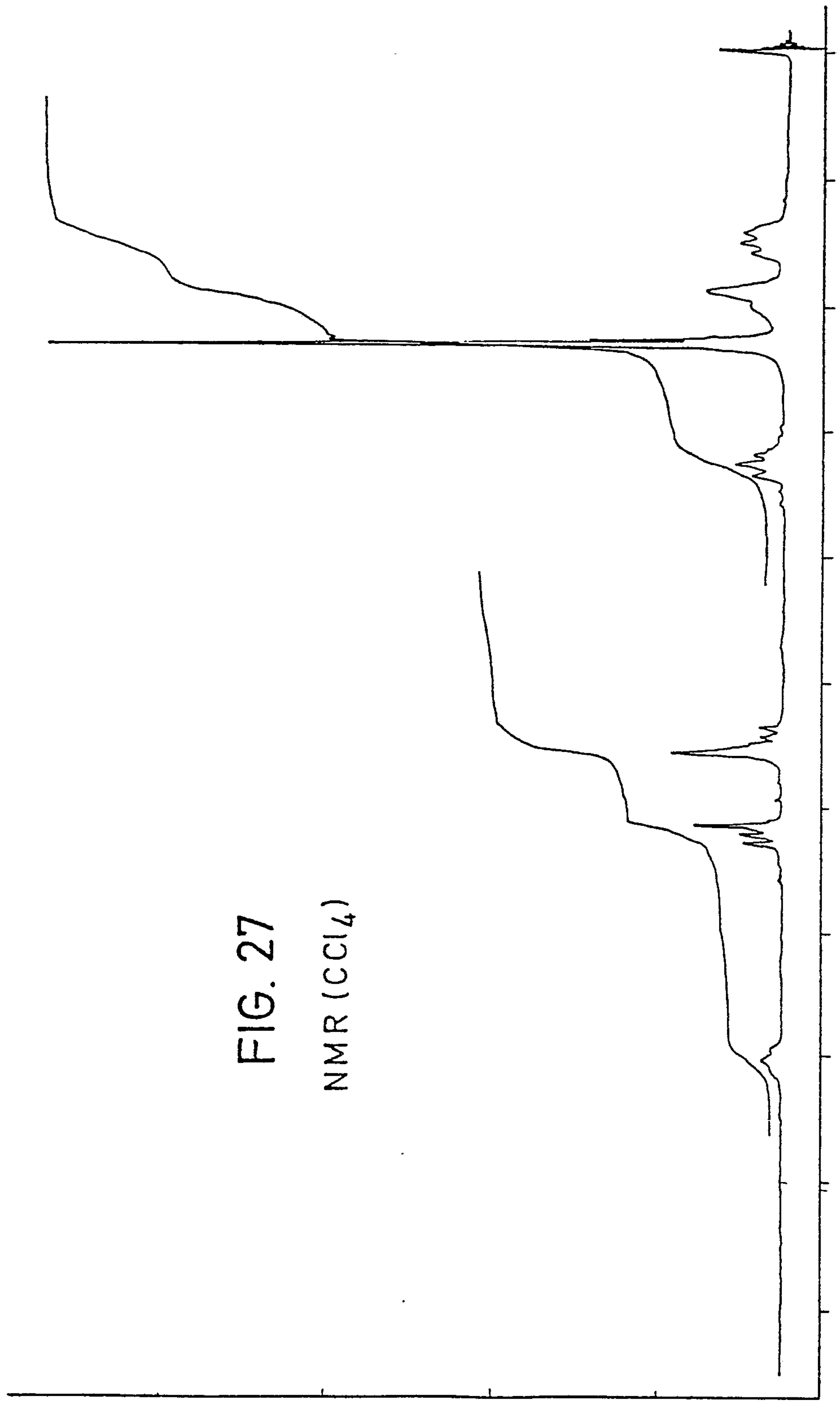

FIG. 27
NMR ($CCl_4$)

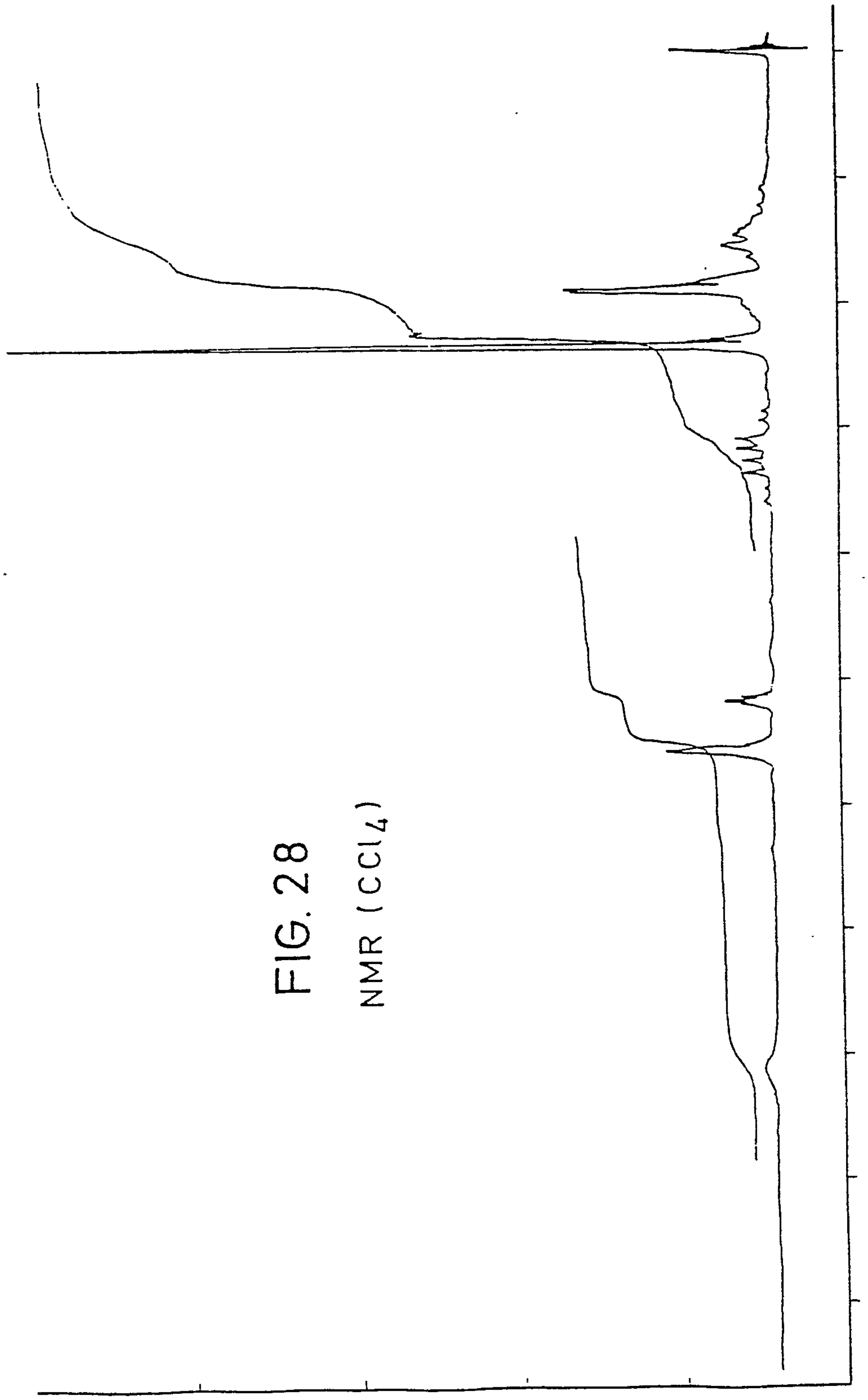

FIG. 28

NMR ($CCl_4$)